(19) Europäisches Patentamt
European Patent Office
Office européen des brevets

(11) **EP 1 410 588 B1**

(12) **EUROPEAN PATENT SPECIFICATION**

(45) Date of publication and mention
of the grant of the patent:
**07.04.2010 Bulletin 2010/14**

(21) Application number: **01966571.0**

(22) Date of filing: **05.09.2001**

(51) Int Cl.:
*H04L 25/02* (2006.01)       *H04L 25/49* (2006.01)

(86) International application number:
**PCT/US2001/027478**

(87) International publication number:
**WO 2002/021782 (14.03.2002 Gazette 2002/11)**

(54) **Communication system, multilevel signal and mulitlevel signal driver using equalization or crosstalk cancellation**

Kommunikationssystem, Mehrpegelsignal und Mehrpegelsignaltreiber mit Entzerrung oder Übersprechauslöschung

Système de communication, signal multi-niveau et pilote à signal multi-niveau utilisant l'égalisation ou la suppression de la diaphonie

(84) Designated Contracting States:
**AT BE CH CY DE DK ES FI FR GB GR IE IT LI LU MC NL PT SE TR**

(30) Priority: **05.09.2000 US 655010**
**05.09.2000 US 654643**

(43) Date of publication of application:
**21.04.2004 Bulletin 2004/17**

(73) Proprietor: **Rambus, Inc.**
**Los Altos, CA 94022 (US)**

(72) Inventors:
• **WERNER, Carl**
**Los Gatos, CA 95032 (US)**
• **HOROWITZ, Mark**
**Menlo Park, CA 94025 (US)**
• **CHAU, Park**
**San Jose, CA 95124 (US)**
• **BEST, Scott**
**Palo Alto, CA 94306 (US)**
• **LIAW, H., J.**
**Fremont, CA 94539 (US)**
• **SIDIROPOULOS, Stefanos**
**Palo Alto, CA 94306 (US)**
• **ZERBE, Jared, LeVan**
**woodside, CA 94062 (US)**
• **KIM, Jun**
**Los Altos Hills, CA 94024 (US)**

(74) Representative: **Eisenführ, Speiser & Partner**
**Johannes-Brahms-Platz 1**
**20355 Hamburg (DE)**

(56) References cited:
**WO-A-99/10982       US-A- 4 748 637**
**US-A- 5 254 883       US-A- 5 608 755**

**Description**

**CROSS REFERENCE TO RELATED APPLICATION(S)**

This application is a continuation-in-part of U.S. Patent Application Serial No. 09/478,916, entitled "Low Latency Multi-Level Communication Interface," filed on January 6, 2000, which claims priority to U.S. Provisional Patent Application Serial No. 60/158,189, entitled "A Method and Apparatus for Receiving High Speed Signals with Low Latency," filed on October 19, 1999.

**FIELD OF THE INVENTION**

The present invention relates generally to the field of electrical buses. More particularly, the present invention relates to a current driver for a high-speed bus, techniques to equalize or compensate for errors that may be present in a multi-level, multi-line signaling system, and, further, it relates to a reference voltage generation for an electrical bus with equalization or crosstalk.

**BACKGROUND OF THE INVENTION**

Computer systems and other electronic systems typically use buses for interconnecting integrated circuit components so that the components may communicate with one another. The buses frequently connect a master, such as a microprocessor or controller, to slaves, such as memories and bus transceivers. Generally, a master may send data to and receive data from one or more slaves. A slave may send data to and receive data from a master, but not another slave.

Each master and slave couple to a prior bus typically includes output driver circuitry for driving signals onto the bus. Some prior bus systems have output drivers that use transistor-transistor logic ("TTL") circuitry. Other prior bus systems have output drivers that include emitter-coupled logic ("BCL") circuitry. Other output drivers use complementary metal-oxide-semiconductor ("CMOS") circuitry or N-channel metal-oxide-semiconductor ("NMOS") circuitry.

While many prior buses were driven by voltage level signals, it has become advantageous to provide buses that are driven by a current mode output driver. A benefit associated with a current mode driver is a reduction of peak switching current. In particular, the current mode driver draws a known current regardless of load and operating conditions. A further benefit is that the current mode driver typically supresses noise coupled form power and ground supplies.

A known current mode driver is shown in U.S. Patent No. 5,254,883 (the "'883 patent"), which is assigned to the assignee of the present invention. The '883 patent discusses an apparatus and method for setting and maintaining the operating current of a current mode driver. The driver in the '883 patent includes an output transistor array, output logic circuitry coupled to the transistor array and a current controller coupled to the output logic circuitry.

For one embodiment, the current controller in the '883 patent is a resistor reference current controller. The current controller receives two input voltages, $v_{TERM}$ and $v_{REF}$, the latter of which is applied to an input of a comparator. $V_{TERM}$ is coupled by a resistor to a node, which is in turn coupled to a second input of the comparator. The voltage at the node is controlled by a transistor array, which is in turn controlled in accordance with an output of the comparator.

When the transistor array is placed in the "off" state, i.e. there is no current flowing through the transistors of the array to ground, the voltage at the node is equal to $v_{TERM}$. In addition, by using the output of the comparator to adjustably activate the transistor array, the '883 patent shows that the voltage at the node may be driven to be approximately equal to the reference voltage, $v_{REF}$.

Knowing the value of $v_{REF}$ and $v_{TERM}$, the current mode driver of the '883 patent therefore provides a binary signaling scheme utilizing a symmetrical voltage swing about $v_{REF}$. Specifically, in a first current state (the "off" state), the current mode driver is not sinking current and the signal line (or bus line) is at a voltage, $v_o = v_{TERM}$, representing a logical "0." In a second current state (the "on" state), the current mode driver is sinking current to drive the voltage on the signal line (or bus line) to be:

$$V_o = V_{TERM} - 2\,(V_{TERM} - V_{REF}).$$

The second state therefore representing a logical "1."

While the above techniques have met with substantial success, end users of data processing systems, such as computers, continue to demand increased throughput. Whether throughput is expressed in terms of bandwidth, processing speed or any other measure, the bottom line is the desire to get a block of data from point A to point B faster. At the same time, however, it is desirable to achieve such increases without requiring deviation from known semiconductor fabrication techniques.

Long-distance uses for multi-PAM signaling include computer or telecommunication systems that employ Gigabit Ethernet over optical fiber (IEEE 802.3z) and over copper wires (IEEE 802.3ab), which use three and five signal levels, respectively, spaced symmetrically about and including ground. Equalization techniques for long-distance multi-level signaling systems such as those used in radio or telecommunication networks commonly include adaptive filters, which can change equalization characteristics adaptively to improve equalization accuracy or in response to changing conditions. The complexities of these equalization techniques can delay signaling by slight but tolerable amounts for these long-distance systems.

Multi-PAM is not traditionally used for communication between devices in close proximity or belonging to the same system, such as those connected to the same integrated circuit (IC) or printed circuit board (PCB). One reason for this may be that within such a system the characteristics of transmission lines, such as buses or signal lines, over which signals travel are tightly controlled, so that increases in data rate may be achieved by simply increasing data frequency. At higher frequencies, however, receiving devices may have a reduced ability to distinguish binary signals, so that dividing signals into smaller levels for multi-PAM is problematic. Multi-PAM may also be more difficult to implement in multi-drop bus systems (i.e., buses shared by multiple processing mechanisms), since the lower signal-to-noise ratio for such systems sometimes results in bit errors even for binary signals. Moreover, complex equalization techniques such as employed for long distance communication systems may not be feasible in a bus system for which low latency is a performance criterion.

Further, while the binary signal levels are commonly used, the use of multi-level signals is a known technique for increasing the data rate of a digital signaling system. Such multi-level signaling is sometimes known as multiple pulse amplitude modulation or multi-PAM, and has been implemented with radio or other long-distance wireless signaling systems. Other long-distance uses for multi-PAM signaling include computer or telecommunication systems that employ Gigabit Ethernet over optical fiber and over copper wires, which use three and five signal levels, respectively.

Additionally, multi-PAM signaling may be used for communication between devices in close proximity or belonging to the same system, such as those connected to the same integrated circuit ("IC") or printed circuit board ("PCB"). In such systems, the characteristics of transmission lines, such as buses or transmission lines, over which the signals travel are tightly controlled, so that the increase in the data rate may be increased by increasing the transmit frequency. However, at higher frequencies, receiving devices may have a reduced ability to distinguish binary signals. Further, for cases in which attenuation of a signal exists between transmission and reception, different amounts of signal loss may occur depending upon the magnitude of transition between logic states. To compensate for the attenuation of the received signal, different equalization signals may be added to the main signal when driving different transitions in order to add predetermined high-frequency components to the transition signals that raise the slope of the edge of the transition. However, a difficulty with this approach for a typical multi-PAM system is that the voltage can only be pulled down from the $V_{TERM}$, unless negative current could flow through current sources. To allow overdriving a transition with the equalization signals, the highest logic state may, therefore, be reduced below $V_{TERM}$. This may cause the respective reference voltages to be no longer centered on the shifted data eyes.

Further, in a system that has numerous closely spaced signal lines, such as a bus for a computer device or a similar device, crosstalk may exist between nearby lines. As is known in the art, crosstalk is a disturbance caused by the electric or magnetic fields of one telecommunication signal and impairs signals on adjacent signal lines. Crosstalk characteristics on a bus may be based upon how many lines are between a crosstalk creator and a signal line being affected by crosstalk. One method for crosstalk cancellation has been described in the co-pending U.S. Patent Application entitled "Low Latency Equalization in Multi-Level, Multi-Line Communication Systems," identified above. Similarly to the equalization mechanism, the crosstalk cancellation provides high frequency component signal and, thus, the highest logic state of the system is typically : reduced below $V_{TERM,}$ causing reference voltage levels to be no longer centered on the shifted data eyes.

WO 99/10982 A refers to a circuit for a high-speed driver and techniques for obtaining rapid switching speed with low power consumption and low noise on high-speed buses. A circuit for controlling signal levels on a transmission channel is disclosed, which comprises a voltage divider to output an average of its inputs, a first output driver connected to a first input of the voltage divider, a second output driver connected to a second input of the voltage divider, an input comparator to compare the output of the voltage divider with a reference voltage, a latch to sample an output of the input comparator, and a current control counter holding a "current control value, adjusted based on a content of the latch, wherein the current control counter determines output levels at an output of the integrated circuit.

Thus, it is still desirable to develop a method and system for reference voltage generation that would track, the logic state shifts due to equalization or crosstalk.

The present invention refers to a communication system comprising a main driver adapted to receive a plurality of input signals and to output on a first line a first signal that varies over time between N output levels based on said plurality of input signals, and an equalization mechanism including a first auxiliary driver having a gain that is substantially proportional to and smaller than said first main driver, said first auxiliary driver configured to receive delayed and inverted versions of said first plurality of input signals and to output on said first line a second signal, said second signal being combined with said first signal to form a multilevel signal including transitions among N logic states, wherein a respective logic state is shifted down from a respective one of the N output levels by an amount dependent on the respective logic state, and wherein a respective transition in the multilevel signal is overdriven by an amount dependent on a transition magnitude of the respective transition.

The present invention further refers to a multilevel signal output from an integrated circuit, comprising a main signal component including transitions among at least four logic states; and equalization signal components each having a duration not longer than one bit, the equalization signal components being added to the main signal component such that a respective transition in the main signal component is followed by a respective equalization signal component that overdrives the respective transition by an amount dependent on a transition magnitude of the respective transition.

The present invention also refers to a multilevel signal driver to output a multilevel signal and an integrated circuit including the multilevel signal driver, wherein a multilevel signal driver comprises main signal means for generating a main signal component including transitions among at least four logic states; said multilevel signal driver being characterized by equalization signal means for generating equalization signal components each having a duration not longer than one bit, and adding means for adding the equalization signal components to the main signal component such that a respective transition in the main signal component.

A multi-level driver uses multiple pulse amplitude modulation (multi-PAM) output drivers send multi-PAM signals. A multi-PAM signal has more than two voltage levels, with each data interval now transmitting a "symbol" at one of the valid voltage levels. In one embodiment, a symbol represents two or more bits. The multi-PAM output driver drives an output symbol into a signal line. The output symbol represents at least two bits that include a most significant bit (MSB) and a least significant bit (LSB). A multi-PAM receiver receives the output symbol from the signal line and determines the MSB and the LSB.

In accordance with a first aspect of the invention, a current controller for a multi-level current mode driver is provided. The current controller includes a multi-level voltage reference and at least one source calibration signal. A comparator is coupled by a coupling network to the multi-level voltage reference and the at least one source calibration signal. The current controller further includes a circuit for applying a selected voltage from the multi-level voltage reference and a selected source calibration signal from the at least one source calibration signal to the comparator.

In accordance with a second aspect of the invention, a method of calibrating a multi-level current mode driver is provided. The method includes two current sinks, each capable of sinking current from a termination voltage though a resistor. The first transistor array drives a known amount of current through its resistor producing a first input signal. Similarly, the second current sink is turned on to produce a second input signal. An average value of the first input signal and the second input signal is calculated. The average value of the first input signal and the second input signal is compared to a first known reference voltage. And, the second current sink, and thereby the second input signal, is adjusted until the average value equals the known reference voltage.

In accordance with another aspect of the invention, a reference voltage generator for a driver, such as a current driver, is provided. The current driver includes at least one reference voltage level, at least one current control signal, and at least one active device coupled to a selected reference voltage level of the at least one reference voltage level and the at least one current control signal. The active device shifts the at least one reference voltage level based on the at least one current control signal such as an equalization signal or a crosstalk cancellation signal. In one embodiment, the current driver is arranged to operate in a 2-PAM mode, a 4-PAM mode, or an N-PAM mode.

In accordance with another aspect of the invention, a method for generating a plurality of reference voltage levels for a driver is provided. The method includes providing at least one reference voltage level, providing at least one current control signal, and adjusting the at least one reference voltage level based on the at least one current control signal. In one embodiment, the at least one reference voltage level is generated on a resistive voltage divider or a reference voltage driver. Further, the at least one current control signal may include, for example, an equalization current control signal or a crosstalk cancellation signal.

Further, another embodiment of the invention is directed to low-latency equalization mechanisms for short-range communications systems. Such equalization mechanisms may compensate for signal attenuation along a transmission line, reflections due to impedance discontinuities along such a line, and crosstalk between adjacent lines. The equalization mechanisms may be particularly advantageous for multi-PAM communications systems

These as well as other aspects and advantages of the present invention will become more apparent to those of ordinary skill in the art by reading the following detailed description, with reference to the accompanying drawings.

## BRIEF DESCRIPTION OF THE DRAWINGS

Figure 1 is a block diagram of a memory controller, bus and memories utilizing an output driver in accordance with a preferred embodiment of the present invention.

Figure 2 illustrates a preferred encoding scheme utilizing a multi-level voltage reference for use with a multi-level output driver.

Figures 3A and 3B are schematic diagrams of a first and a second multi-level output driver in accordance with embodiments of the present invention.

Figure 4A is a graph showing $g_{ds}$ distortion in a transistor.

Figures 4B and 4C illustrate the effect of $g_{ds}$ distortion on the output voltage of a four-level output driver encoding in binary and gray code, respectively.

Figure 5A is an electrical schematic of a multi-level output driver, having a binary generator, that corrects for $g_{ds}$ distortion.

Figure 5B is an electrical schematic of an alternate embodiment of the binary generator shown in Figure 5A.

Figure 6 is an electrical schematic of a circuit to reduce switching noise at an output pin.

Figure 7 is an electrical schematic of a multi-level driver, such as the driver shown in Figure 5A, that further incorporates a circuit to reduce switching noise, such as the circuit shown in Figure 6.

Figure 8 is an electrical schematic of another alternative $g_{ds}$ compensated, multi-level output driver.

Figure 9A is an electrical schematic of a $g_{ds}$ compensated, multi-level output driver with current control circuitry.

Figure 9B is an electrical schematic of a set of stacked transistor pairs for a current drive block, such as the current drive blocks shown in Figure 9A.

Figure 9C is an electrical schematic of a preferred $g_{ds}$ compensated, multi-level output driver.

Figure 10 is an electrical schematic of a circuit for calibrating a $g_{ds}$ compensated output driver with current control circuitry.

Figures 11A and 11B are a flowchart of a method for calibrating the current control circuitry using the setup of Figure 10 for the output driver shown in Figure 9A.

Figure 12 is an electrical schematic of an on-chip, multi-level reference voltage generator utilizing a resistive voltage divider.

Figures 13A and 13B are electrical schematics of a first preferred alternative to the current control calibration circuit of Figure 10.

Figure 13C is a timing diagram for the circuits of Figures 13A and 13B.

Figure 13D illustrates alternative embodiments for the differential comparator of Figure 13B.

Figure 13E illustrates an electrical schematic of a charge coupled comparator using PMOS capacitors.

Figures 14A and 14B are electrical schematics of a second preferred alternative to the current control calibration circuit of Figure 10.

Figures 14C and 14D are timing diagrams for the circuits of Figures 14A and 14B.

Figure 15A is an electrical schematic of a linear transconductor.

Figure 15B is a schematic of a comparator using a transconductor stage.

Figure. 16 is a signaling device that may be used to create the multi-level voltage reference of Figure 2.

Figure 17 is an electrical schematic of an on-chip, multi-level reference voltage generator utilizing a resistive voltage divider.

Figure 18 is an alternative electrical schematic of an on-chip, multi-level reference voltage generator utilizing a resistive voltage divider.

Figure 19 illustrates attenuation affecting the transitory level obtained by a step.

Figure 20 illustrates addition of equalization signal to the logic state transitions affected by signal attenuation in Figure 19.

Figure 21 is an encoding scheme utilizing a multi-level voltage reference where the logic levels are shifted to allow for overdrive signals.

FIG. 22A shows initial, transition and final states of a signal that may represent a transition illustrated in Table 3.

FIG. 22B shows initial, transition and final states of a main component of the signal shown in FIG. 22A.

FIG. 22C shows initial, transition and final states of an auxiliary component of the signal shown in FIG. 22A.

Figure 23 illustrates a device that can provide overdrive signals to compensate for signal attenuation.

Figure 24 shows a finite impulse filter (FIR) filter representation of the device in Figure 23.

Figure 25 illustrates a general equalization system for a signal line, including a self-equalization FIR filter and a number of crosstalk equalization FIRs;

Figure 26A illustrates a signal transition that may create crosstalk on adjacent signal lines.

Figure 26B illustrates crosstalk noise from the signal transition of Figure 26A, imposed on a signal in an adjacent line.

Figure 26C illustrates an equalization signal that compensates for the crosstalk noise shown in Figure 26B.

Figure 26D illustrates a first component of the equalization signal shown in Figure 26C.

Figure 26E illustrates a second component of the equalization signal shown in Figure 26C.

Figure 27 is a signal driver, self-equalization and crosstalk equalization communication device.

FIG. 28 shows an equalization mechanism that inputs MSB and LSB signals to provide compensation.

FIG. 29 shows a general FIR filter having a number of self-equalization and crosstalk-equalization mechanisms tapped at various delay times.

FIG. 30 illustrates a mechanism for adjusting equalization parameters such as the magnitude, timing and sign of various equalization signals.

FIG. 31 shows an encoder that converts MSB and LSB signals into input signals for the output driver and equalization mechanisms.

FIG. 32 shows receiver that receives the multi-level signals sent by the main and auxiliary drivers and decode the signals into MSB and LSB components.

FIG. 33A shows a signal transition that has a high-frequency noise spike.

FIG. 33B shows an equalization signal designed to compensate for a DC component of the spike of FIG. 32A.

FIG. 33C shows a smoothing of the signal of FIG. 33B by integration.

FIG. 34 shows a system with a number of adjacent signal lines that may create crosstalk, and standardized FIR filters coupled between the lines.

FIG. 35 shows a system with a number of adjacent signal lines grouped in pairs with a ground wire disposed between the pairs of lines and standardized FIR filters coupled between the lines.

FIG. 36 illustrates a memory system in which embodiments of the present invention may be applied.

Figure 37 is an electrical schematic of an on-chip, multi-level reference voltage generator utilizing a resistive voltage divider, where the multi-level reference voltage reflects logic state shifts.

Figure 38 is an electrical schematic of a multi-level reference voltage generator utilizing op-amp drivers, where the multi-level reference voltage reflects logic state shifts.

Figure 39 is an electrical schematic of an on-chip multi-level reference voltage generator utilizing on-chip drivers, where the multi-level reference voltage reflects logic state shifts.

Figure 40 is a flow chart illustrating an exemplary method for generating at least one reference voltage level for a driver using equalization and crosstalk cancellation.

## DETAILED DESCRIPTION OF THE PREFERRED EMBODIMENT(S)

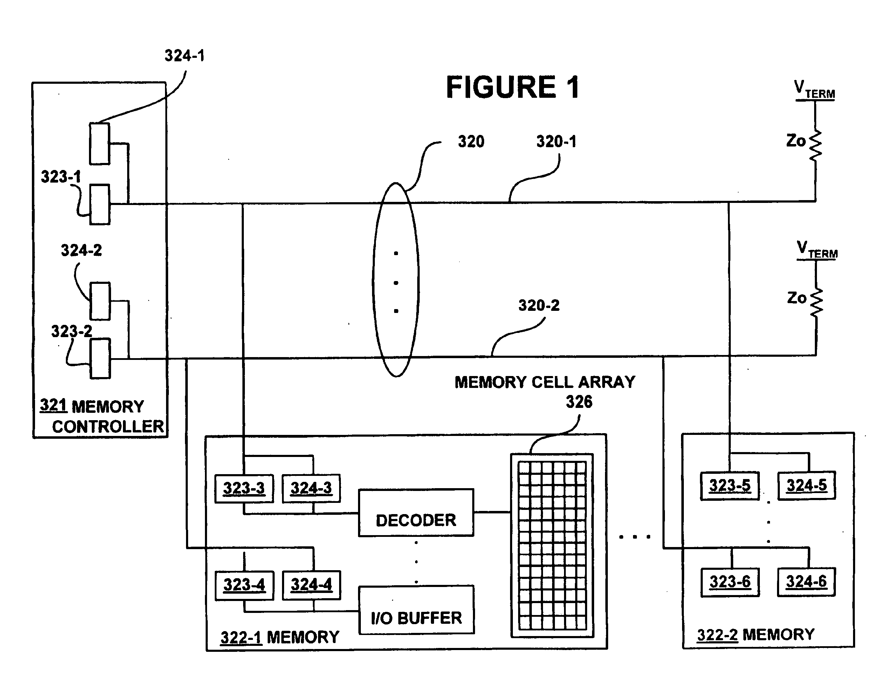

In Figure 1, a bus 320 interconnects a memory controller 321 and memories 322. The bus 302 is formed of signal lines 320-1, 320-2 that transmit address, data and control signals. Physically, on each integrated circuit 321, 322, the address, data and control signals are supplied to and output from external connections, called pins, and the bus 320 interconnects respective pins. The bus 320 may be implemented as traces on a printed circuit board, wires or cables and connectors. Each of these integrated circuits 321, 322 has bus output driver circuits 323 that connect to the pins to interface with the bus 320 to transmit signals to other ones of the integrated circuits. In particular, the bus output drivers 323 in the memory controller 321 and in the memories 322 transmit data over the bus 320. Each bus output driver 323 drives a signal line of the bus 320. For example, bus output driver 323-1 in the memory controller 321 drives bus line 320-1. The bus 320 supports signaling with characteristics that are a function of many factors such as the system clock speed, the bus length, the amount of current that the output drivers can drive, the supply voltages, the spacing and width of the wires or traces making up the bus 320, the physical layout of the bus itself and the resistance of a terminating resistor Zo attached to each bus.

At least a subset of the signal lines connect to pull-up resistors Zo that connect to a termination voltage $V_{TERM}$. In some systems, all signal lines connect to pull-up resistors Zo that connect to the termination voltage $V_{TERM}$. The termination voltage $V_{TERM}$ can be different from the supply voltage $V_{DD}$ or not. Further, the termination resistors can be off-chip or on-chip. In one embodiment, the supply voltage $V_{DD}$ is equal to 2.5 volts, the termination voltage $V_{TERM}$ is equal to 1.8 volts, the bus voltage for a signal at low levels $V_{OL}$ is equal to 1.0 volts, and the voltage swing is 0.8 volts. The resistance of the terminating resistors Zo is equal to twenty-eight ohms.

The output drivers 323 are designed to drive the bus 320 with a predetermined amount of current; and the bus receivers 324 are designed to receive the signals sent by the bus drivers 323 on the bust 320. In a device, each bus receiver 324 receives signals from one signal line of the bus 320. The bus receivers 324 are integrating receivers according to the present invention.

In one embodiment, the memories are random access memories (RAMs). In an alternative embodiment, the memories are read-only memories (ROMs). Alternatively, the bus output drivers 323 and bus receivers 324 of the present invention are implemented in other semiconductor devices that use a bus to interconnect various types of integrated circuits such as microprocessors and disk controllers.

In yet another alternative embodiment, the output drivers are implemented in a point-to-point system. Although a bus that uses current mode signaling has been described with respect to Figure 1, the apparatus and method of the present invention may be used in any signaling system where it is desirable to distinguish between signals having different voltage levels.

Multi-Level Signaling

Referring back to Figure 1, in previously known implementations of the bus system, signals transmitted on each signal line of the bus have either of two voltage levels representing a binary zero or one for binary digital communication. For example, an output voltage equal to the voltage level $V_{TERM}$ set by the voltage source at one end of the termination resistor Zo may represent a binary zero. And, an output voltage level equal to $V_{TERM}$ - (I*Zo) may represent a binary one, where the output driver circuit 323 sinks an amount of current equal to 1. In this way, the bus driver circuits 323 can be implemented as switched current sources that sink current when driving binary one's onto the signal lines. When receiving data, the receiver circuits 324 detect whether the voltage on the signal line is greater than or less than $V_{TERM}$ - 0.5(I*Zo), i.e. the midpoint between a logical zero and a logical one, to determine whether the data is a binary zero or one, respectively. In one embodiment, data is transmitted and received on each edge of the system clock to achieve a data rate equal to twice the frequency of the system clock. In an alternative embodiment, data is transmitted once per clock cycle of the system clock.

As used herein, the term multi-level signaling refers to signaling schemes utilizing two or more signal levels. Multi-level signaling may also be referred to herein as multiple level pulse amplitude modulation, or multi-PAM, signaling, because the preferred coding methods are based upon the amplitude of the voltage signal. Although the multi-level signaling of the preferred embodiments will be described with respect to a current mode bus, multi-level signaling can also be used with a voltage mode bus.

In various embodiments of the present invention, the data rate on a bus is increased without increasing either the system clock frequency or the number of signal lines. Output drivers generate, and receivers detect, multi-PAM signals that allow multiple (k) bits to be transmitted or received as one of $2^k$ possible voltages or data symbols at each clock edge or once per clock cycle. For example, one preferred embodiment is a 4-PAM system in which two bits are represented by $2^2$ or four voltage levels, or data symbols, and the two bits are transferred at every clock edge by transferring an appropriate one of the four voltage levels. Therefore, the data rate of a 4-PAM system is twice that of a binary or 2-PAM system.

Multi-PAM is not traditionally used in multi-drop bus systems due, at least in part, to the lower signal-to-noise ratio that is realized when the voltage range is divided into multiple levels. Prior art memory systems have been implemented as only binary systems. A preferred embodiment allows such systems to be implemented using more than two signal levels.

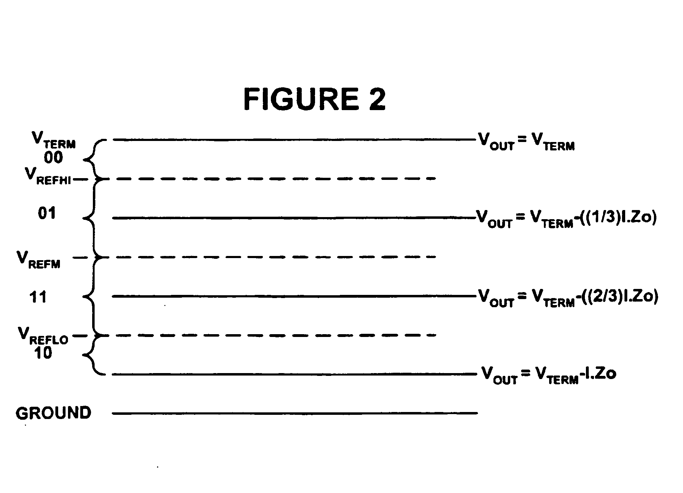

In Figure 2, a graph shows one embodiment utilizing a 4-PAM signaling scheme. Specifically, the multi-PAM voltage levels are associated with two-bit binary values or symbols such as 00, 01, 10 and 11. In the embodiment of Figure 2, the binary values are assigned to voltage levels using Gray coding, i.e. the symbol sequence from the highest voltage level to the lowest voltage level is 00, 01, 11, 10. Gray coding provides the advantage of reducing the probability of dual-bit errors because only one of the two bits changes at each transition between voltage levels. If a received 4-PAM voltage symbol is misinterpreted as an adjacent symbol, a single-bit error will occur.

The y-axis of the graph in Figure 2 shows the associated 4-PAM output voltages $V_{OUT}$ for each symbol. To provide the appropriate voltage to transmit a 4-PAM symbol, the output driver sinks a predetermined amount of current for that symbol. In particular, each symbol is associated with different amount of current. To transmit the symbol "00", the output driver 323 sinks no current and the signal line is pulled up to $V_{TERM}$. To transmit the symbol "01", the bus output driver 323 sinks a predetermined amount of current 101 to cause the output voltage $V_{OUT}$ to equal $V_{TERM}$ (I· Zo), where I01 is equal to 1/3 I. To transmit the symbol "11", the bus output driver 323 sinks a predetermined amount of current I11 to cause the output voltage $V_{OUT}$ to equal $V_{TERM}$ 2/3 (I· Zo), where I11 is equal to 2/3 I. To transmit the symbol "10", the bus output driver 323 sinks a predetermined amount of current I to cause the output voltage $V_{OUT}$ to equal $V_{TERM}$ (I· Zo). Further details regarding preferred embodiments of the output driver 323 are provided below.

In one embodiment the communication system is employed for a memory bus, which may for instance include random access memory (RAM), like that disclosed in U.S. Patent Number 5,243,703 to Farmwald et al.. The multi-PAM communication and low-latency signal correction techniques disclosed herein may also be used for other contained systems, such as for communication between processors of a multiprocessor apparatus, or between a processor and a peripheral device, such as a disk drive controller or network interface card over an input/output bus.

A 4-PAM receiver identifies a received symbol based on a voltage range or range of voltages associated with that symbol. A set of reference voltages $V_{REFLO}$, $V_{REFM}$ and $V_{REFHI}$ function as thresholds to define ranges of voltages associated with each 4-PAM symbol. In accordance with a preferred embodiment, the reference voltages $V_{REFLO}$, $V_{REFM}$ and $V_{REFHI}$ are set at the midpoint voltage between neighboring symbols. For example, the symbol "00" is associated with voltages greater than $V_{REFHI}$. The symbol "01" is associated with voltages falling within the range between $V_{REFHI}$ and $V_{REFM}$. The symbol "11" is associated with a range of voltages from $V_{REFM}$ to $V_{REFLO}$. The symbol "10" is associated with a. range of voltages less than $V_{REFL}0$. The reference voltages $V_{REFHI}$, $V_{REFM}$ and $V_{REFLO}$ are threshold voltages from which a multi-PAM data symbol is determined to be one of the four possible data symbols.

4-PAM symbols or signals also allow for direct compatibility with 2-PAM or binary signaling. When operating in 4-PAM mode, the received data bits are compared to the three reference voltages, $V_{REFHI}$, $V_{REFM}$ and $V_{REFLO}$ to determine the 4-PAM symbol and the associated two bits. Because the most significant bit (MSB) is determined by comparing the received data bit to $V_{REFM}$, i.e.the MSB is zero for voltages greater than $V_{REFM}$ and the MSB is one for voltages less than VRHFM, the multi-PAM system can be used as a 2-PAM system by ignoring the least significant bit (LSB) and using the MSB. Alternatively, to transmit 2-PAM symbols using the gray code of Figure 2, the LSB is set equal to zero (low), while the MSB determines the output voltage. More information on 2-PAM and multi-PAM systems may be found in the co-pending U.S. Patent Application entitled "Low Latency Multi-Level Communication Interface," identified above.

Multi-PAM signaling increases the data rate with a small increase in power consumption because the number of input/output (I/O) pins and the system clock frequency may be the same as that used for binary signaling. The major factor in the power consumption of CMOS circuits, for example, is the $CV^2F$ power, which depends directly on the system clock frequency. Therefore, increasing the system clock frequency to increase the data rate directly increases the power consumption. Although some additional power is used for the additional circuitry of the multi-PAM interface, described below, this increase in power is much less than the increase in power that would occur if either the number of I/O pins or the system clock frequency were increased to increase the data rate.

Multi-PAM signaling also increases the data rate without a corresponding increase in the electro-magnetic interference (EMI). If the data rate were increased by increasing the number of I/O pins or by increasing frequency, the EMI would increase proportionally. Because multi-PAM signaling does not increase the number of I/O pins, the EMI does not increase if the total voltage amplitude of the multi-PAM I/O pins remains the same as that used in binary signaling. The total voltage amplitude may be increased to provide greater voltage margin to improve system reliability. Although the EMI would increase correspondingly, the increase would be small than that incurred by increasing the number of I/O pins with binary signaling.

Although the circuits described below use 4-PAM signaling, the embodiments described can be expanded for use in 8-PAM, 16-PAM and, more generally, N-PAM signaling. Accordingly, it is to be understood that the preferred embodiments are not limited to 4-PAM signaling, but rather may be applied to the general, N-PAM signaling, case.

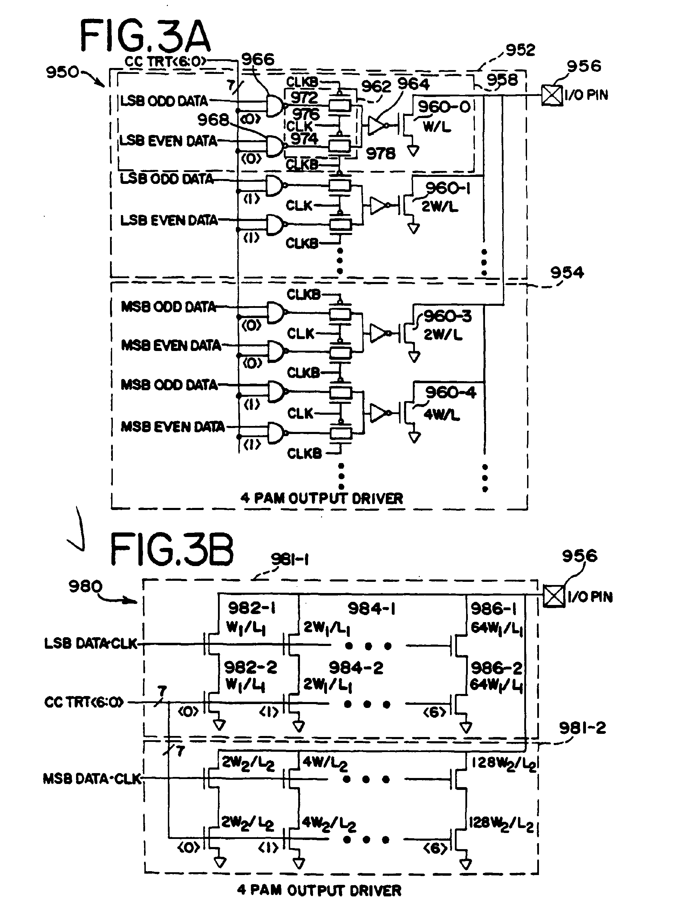

In Figure 3A, a 4-PAM output driver circuit 950 is used with current control bits (CCtrl<6:0>) to produced desired output voltage levels over a set of on-chip process, voltage and temperature (PVT) conditions. In the output driver 950, a first driver circuit 952 and a second driver circuit 954 connect to an I/O pin 956. The first driver circuit 952 drives the LSB, while the second driver circuit 954 drives the MSB. The first driver circuit 952 and the second driver circuit 954 have a set of driver blocks 958 that are connected in parallel. Since the driver blocks have the same components, one driver block 958 will be described. Each driver block has a binary weighted driver transistor 960-0 with a width to length (W/L) ratio as shown. The driver transistors 960 of the second driver circuit 954 are preferably twice as large as the driver transistors of the first driver circuit 952 because the second driver circuit 954 drives the MSB while the first driver circuit 952 drives the LSB. In other words, the MSB is driven with twice as much current as the LSB.

In driver block 958, odd and even data bits are multiplexed onto the driver transistors 950 via passgates 962 and an inverter 964. In this embodiment, odd data is transmitted at the rising edge of the clock, while even data is transmitted at the falling edge of the clock. NAND gates 966, 968 connect to current control bit zero <0>, and the LSB Odd Data bit and LSB Even Data bit, respectively. When the respective current control bit zero <0> is high, the NAND gates 966, 968 are responsive to the odd and even data. When the respective control bit is low, the output of the NAND gates 966, 968 is low and driver block 958 does not respond to the data bit. The current control bits provide the specified amount of current to cause the desired voltage swing regardless of the PVT conditions. The circuit of Fig. 3A uses seven current control bits. Techniques for determining the setting of the current control bits are described below.

The passgates 962 include two transistor pairs, each pair including a PMOS transistor 972, 974 connected in parallel with an NMOS transistor 976, 978. The clock and clock_b signals connect in an opposite manner to the gates of the transistors of the transistor pair.

Although Figure 3A shows that the first driver circuit 952 drives the LSB and the second driver circuit drives the MSB 954, in an alternative embodiment, the first driver circuit 954 drives the MSB and the second driver circuit drives the LSB. Alternatively, any arbitrary coding scheme can be produced by placing combinational logic to combine the data bits before sending the combined data bit to the driver block 958.

Table 1 below shows two 4-PAM encoding schemes that may be implemented using the output driver 950 of Figure 3A.

Table 1: Encoding Schemes

| Coding Scheme | Data Bits (Symbol) to be Transmitted | MSB Input | LSB Input | Output Voltage |
|---|---|---|---|---|
| Binary | 00 | 0 | 0 | $V_{TERM}$ |
| | 01 | 0 | 1 | $V_{TERM} - 1/3\,(I \cdot Zo)$ |

(continued)

| Coding Scheme | Data Bits (Symbol) to be Transmitted | MSB Input | LSB Input | Output Voltage |
|---|---|---|---|---|
| | 10 | 1 | 0 | $V_{TERM}$ - 2/3 (I· Zo) |
| | 11 | 1 | 1 | $V_{TERM}$ - (I· Zo) |
| | | | | |
| Gray | 00 | 0 | 0 | $V_{TERM}$ |
| | 01 | 0 | 1 | $V_{TERM}$ - 1/3 (I· Zo) |
| | 11 | 1 | 1 | $V_{TERM}$ - 2/3 (I· Zo) |
| | 10 | 1 | 0 | $V_{TERM}$ - (I·Zo) |

In another embodiment shown in Figure 3B, a 4-PAM output driver 980 uses current control bits to control switch transistors in series with the output current source transistors, resulting in the desired output voltage levels. Two sets 981-1 and 981-2 of binary weighted transistors 982-986 combines the current control bits with 4-PAM signal generation. The current control bits directly control current-control NMOS transistors 982-2, 984-2, 986-2 that are connected in series with the driver transistors 982-1, 984-1, 986-1, respectively, that receive the LSB and MSB data. For odd data, the driver transistors 982-1, 984-1, 986-1, cause current to flow to the I/O pin 956 when the respective data bit and the clock signal are high, and the associated current control bit is high to place NMOS transistors 982-2, 984-2 and 986-2 in the active state.

The circuit for even data is not shown, but a separate set of current control NMOS transistors connects in series with a set of driver transistors that respond to the logical "AND" of the respective data bit and the complement of the clock signal Clock_b for even data.

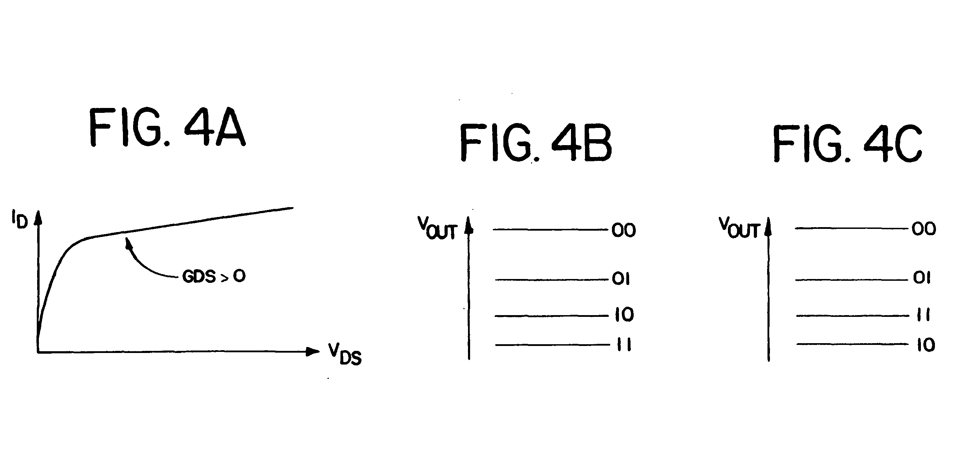

The output voltages of the circuits of Figures 3A and 3B include gds distortion from the driver transistors. In Figure 4A, a graph shows gds distortion. The x-axis shows the drain-to-source voltage, and the y-axis shows the drain current. Specifically, gds of a MOS transistor is the change of drain current in response to a change in drain voltage. Figures 4B and 4C show the data bits, in binary and gray code respectively, and the effect of gds distortion on the output voltage $V_{OUT}$. In particular, as the output voltage $V_{OUT}$ decreases, the incremental voltage difference between adjacent bits pairs decreases. Because of gds distortion, the voltage increments between the 4-PAM voltages are generally not equal.

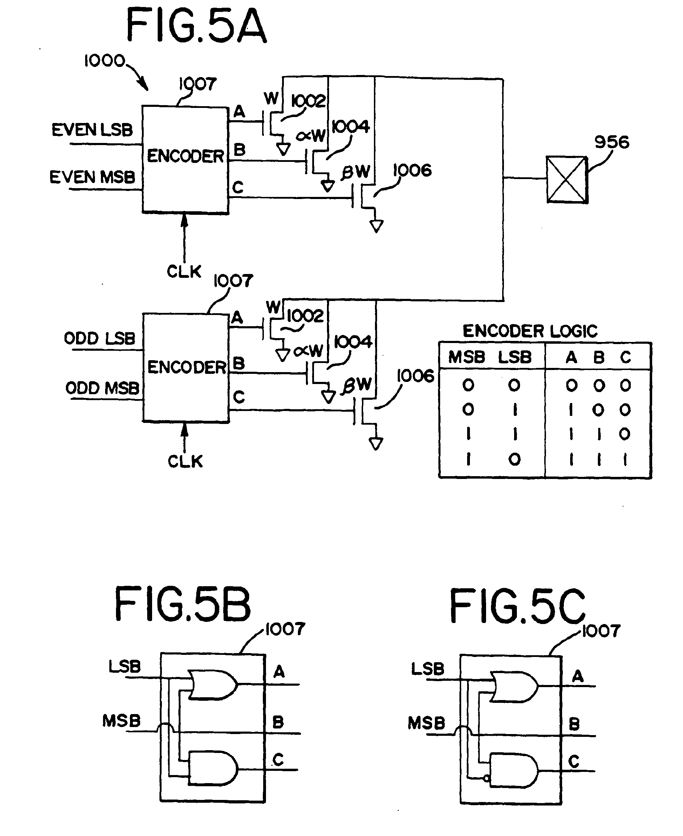

In Figure 5A, a 4-PAM output driver 1000 that corrects for gds distortion is shown. The output driver 1000 is two-way multiplexed, with the multiplexing occurring at the I/O pin 956. The output driver is of the open-drain type and operated in current-mode, with the output current set by a bias voltage on a current source device coupled in series with each of the transistors 1002, 1004 and 1006. For simplicity the current control transistors are not shown. In accordance with a preferred embodiment, a new output symbol is generated on each rising and falling edge (referred to herein as "odd" and "even," respectively) of the clock.

The gds distortion is eliminated by adjusting the width to length (W/L) ratio of transistors 1004 and 1006 by factors $\alpha$ and $\beta$, such that $\beta>\alpha>1$ and the incremental voltage difference between adjacent 4-PAM levels is constant. Transistors 1002, 1004 and 1006 have a width to length ratio of W/L, $\alpha$(W/L), and $\beta$(W/L) respectively.

Examples of encoding schemes that may be implemented using the output driver of Figure 5A are shown in Table 2 below. In accordance with a preferred embodiment, input signals A, B, and C are derived from the MSB and LSB of a symbol to be transmitted to produce the 4-PAM levels as shown in Table 2 below. The encoder of the output driver 1000 uses combinational logic 1007 to produce the A, B and C inputs according to Table 2.

Table 2: Mapping of Data Bits to ABC Inputs and Encoding Schemes

| Coding Scheme | Data Bits (Symbol) to be Transmitted | A | B | C | Output Voltage |
|---|---|---|---|---|---|
| Binary | 00 | 0 | 0 | 0 | $V_{TERM}$ |
| | 01 | 1 | 0 | 0 | $V_{TERM}$ - 1/3 (I· Zo) |
| | 10 | 1 | 1 | 0 | $V_{TERM}$ - 2/3 (I· Zo) |
| | 11 | 1 | 1 | 1 | $V_{TERM}$ - (I· Zo) |
| | | | | | |
| Gray | 00 | 0 | 0 | 0 | $V_{TERM}$ |

(continued)

| Coding Scheme | Data Bits (Symbol) to be Transmitted | A | B | C | Output Voltage |
|---|---|---|---|---|---|
| | 01 | 1 | 0 | 0 | $V_{TERM}$ - 1/3 (I·Zo) |
| | 11 | 1 | 1 | 0 | $V_{TERM}$ - 2/3(I·Zo) |
| | 10 | 1 | 1 | 1 | $V_{TERM}$ - (I·Zo) |

A binary encoder 1007 is illustrated in Figure 5B. In the encoder 1007, an OR gate 1008 generates the A signal by performing an OR operation between the LSB and MSB. The B input is the MSB. An AND gate 1009 generates the C signal by performing an AND operation between the LSB and MSB.

In Figure 5C, an alternative preferred encoder 1007 encodes the LSB and MSB using Gray code. The encoder 1007 of Figure 5C is the same as the encoder 1007 of Figure 5B except that, to generate the C signal, the AND gate 1009a receives the complement of the LSB rather than the LSB.

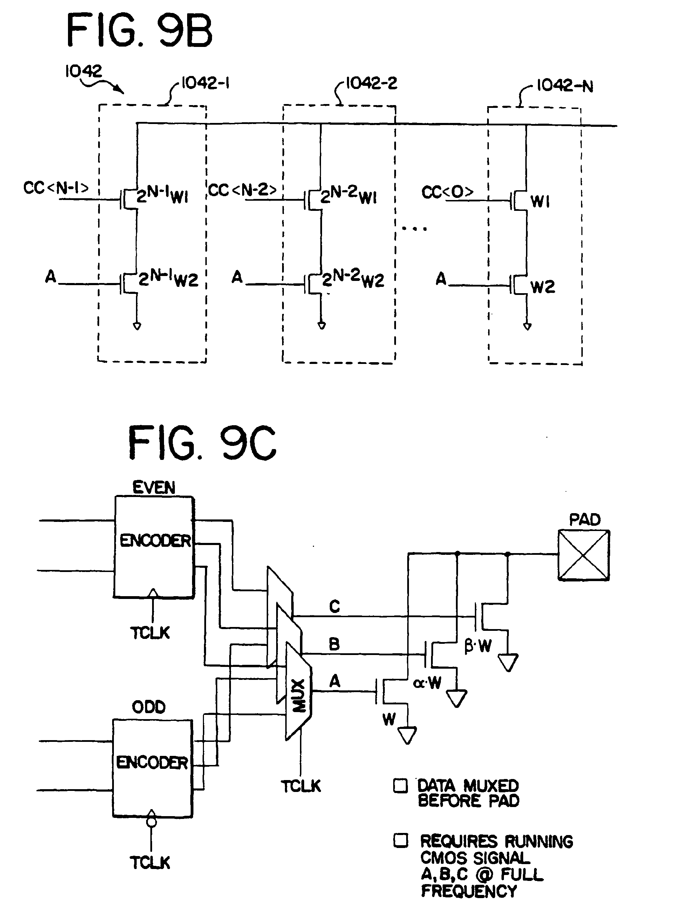

In Figure 9C, an alternative preferred embodiment of the gds compensated output driver is shown. In this embodiment, the output driver has separate odd and even symbol encoders, with the encoder outputs being multiplexed at the gates of the output transistors.

On-chip, single-ended output drivers, as shown in Figures 3A and 3B generate switching noise. For example, when the transistors in the output driver transition from sinking no current such as when driving the "00" symbol, to sinking maximum current such as when driving the gray-coded "10" symbol, the current surges through the I/O pin 956 and through a ground pin. The path between I/O pin 956 and ground has inherent inductance that opposes the current surge and produces significant switching noise (i.e., ground bounce). Because the voltage margins for multi-PAM signaling are less than the voltage margins for binary signaling, switching noise may cause decoding errors.

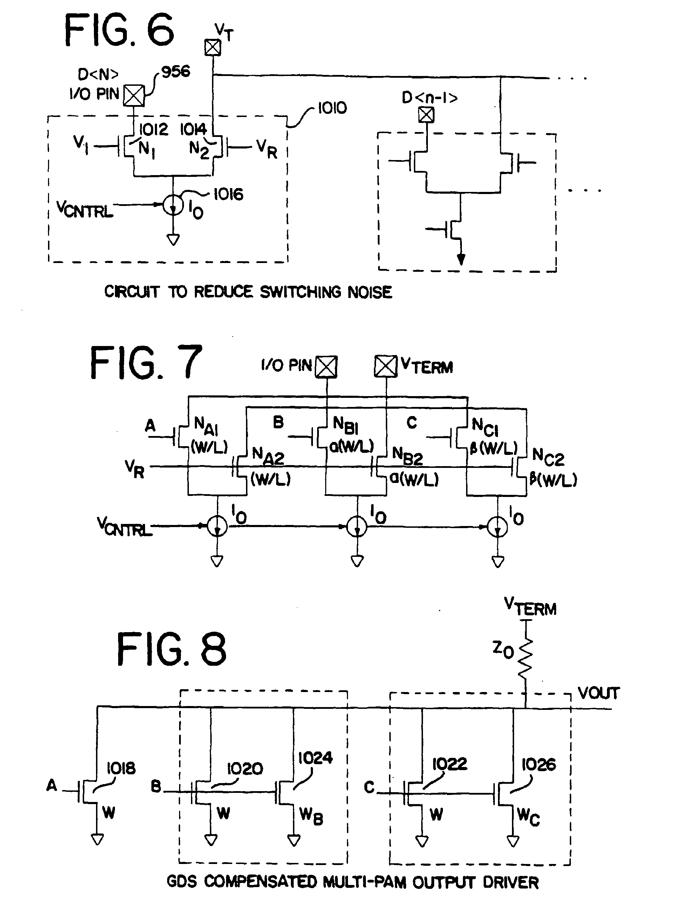

To reduce sensitivity to switching noise, output drivers can provide a constant or semi-constant current to ground regardless of the output current being driven. As shown in Figure 6, each single-ended transistor branch 960 (Figure 3A) and 986 (Figure 3B) in the output drivers of Figures 3A and 3B is replaced with a differential pair 1010.

When the output driver sinks output current from the I/O pin 956, current is steered through transistor N1 1012 to ground. When transistor N1 1012 is inactive, transistor N2 1014 becomes active to allow the same or substantially the same amount of current to flow to ground. In this way, a substantially constant amount of current continuously flows to ground to eliminate a large portion of the output driver switching noise and provide a quieter on-chip ground, thereby improving the performance of the 4-PAM signaling. The signal Vi, is the signal that drives transistor N1 1012. Alternatively, the signal VR that drives transistor N2 1014 is a reference voltage between ground and Vi. In response to an input voltage VCntrl, the current source 1016 sinks a predetermined current Io to ground.

Figure 7 is another embodiment of a multi-PAM output driver that combines the circuit of Figure 5A, which eliminates gds distortion, with the circuit of Figure 6 to reduce sensitivity to switching noise.

In Figure 8, yet another gds compensated 4-PAM output driver is shown. In the 4-PAM output driver, the A, B, and C signals drive equal-sized NMOS transistors 1018, 1020, 1022 having width W. In accordance with a preferred embodiment, signals B and C also drive NMOS transistors 1024, 1026 of width WB and Wc, respectively, to compensate for gds distortion. The widths of the NMOS transistors 1024 and 1026, $W_B$ and $W_C$, respectively, are chosen such that the difference between output levels for adjacent bits is substantially the same, such as 1/3 (I·Zo). The widths of the transistors 1018-1026 may therefore have the following relationship:

$$W+W_C > W+W_b > W$$

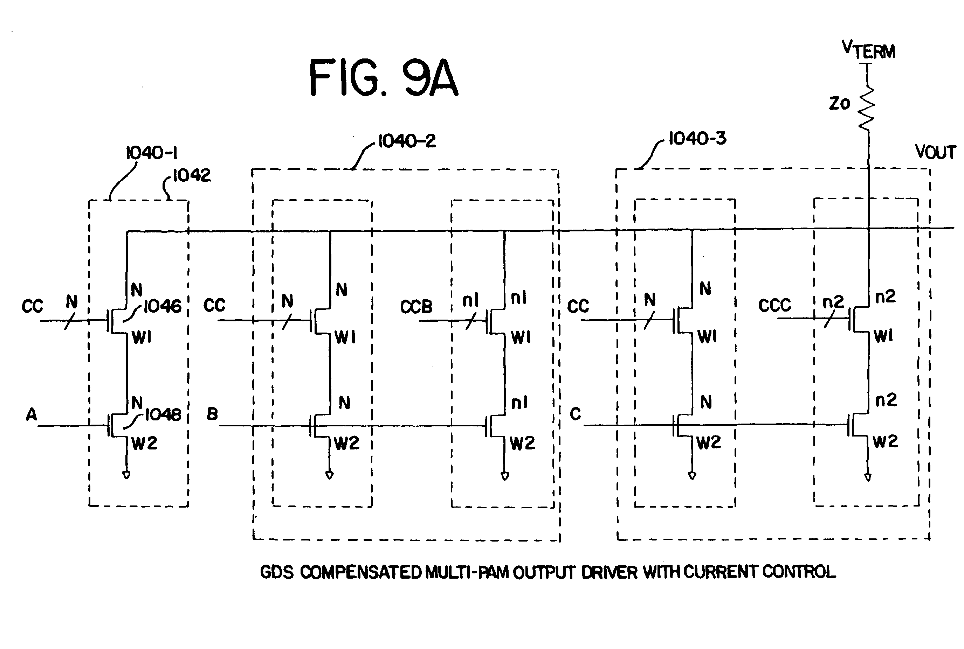

In Figure 9A, a 4-PAM output driver corrects the gds distortion and provides current control. As described above, the signals A, B and C preferably determine the output voltage or symbol in accordance with the gray-coded binary signaling shown in Table 2, above. In addition, three sets of current control calibration bits, CC, CCB and CCC, respectively determine the amount of current supplied by the output driver for various combinations of A, B and C. The first set of control bits CC provides primary current control, while the second and third sets of current control bits, CCB and CCC, respectively, fine tune the amount of current. The first set of current control bits CC has N bits; the second set of current control bits CCB has n1 bits; and the third set of current control bits CCC has n2 bits. In one embodiment, the relationship between the number of current control bits is as follows:

$$n1 \leq n2 < N.$$

There may be different relationships between N, n1 and n2 in alternative embodiments.

Each of the A, B and C signals is associated with a current drive block 1040 to drive a predetermined amount of current associated with the symbol. Each current drive block 1040 includes one or more sets of stacked resistor pairs 1042 that are associated with each set of current control bits for that current driver block 1040. For example, the current drive block 1040-1 that drives the A signal receives current control bits CC. The current drive block 1040-2 that drives the B signal receives current control bits CC and CCB. The amount of current supplied by current drive block 1040-2 is adjusted for gds distortion using the CCB bits. The current drive block 1040-3 that drives the C signal receives current control bits CC and CCC. The amount of current supplied by current drive block 1040-3 is adjusted for gds distortion using the CCC bits.

Referring also to Figure 9B, a set of stacked transistor pairs 1042 is shown. Each stacked transistor pair 1042 includes two NMOS transistors 1046, 1048 connected in series. The lower NMOS transistor 1046 connects to the one of the A, B, or C signals associated with the current drive block 1040. The upper NMOS transistor 1048 connects to a current control bit. The lower NMOS transistor 1046 is preferably wider than the upper NMOS transistor 1048. Because there are N CC bits, there are N stacked transistor pairs. For example, the current control block 1040 has N stacked transitory pairs 1042-1 to 1042-N, and each stacked transistor pair connects to one of the current control bits, CC <0> to CC <N-1>.

The transistors of the stacked transistor pairs are binary weighted with respect to minimum width of W1 for the upper transistors and W2 for the lower transistors. The widths W1 and W2 may be chosen to determine output characteristics such as output resistance and capacitance. Generally the widths W1 and W2 are chosen such that W1 is less than W2.

Although drawn to illustrate the circuit for the CC current control bits, the circuit diagram of Figure 9B also applies to the sets of stacked transistor pairs associated with the CCB and CCC current control bits.

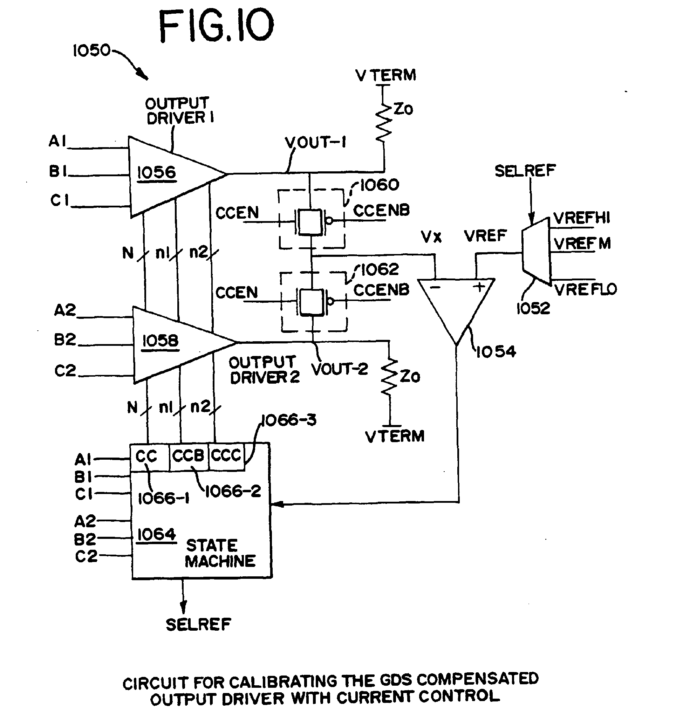

As shown in Figure 10, a current control calibration circuit 1050 determines the settings for the current control bits CC, CCB and CCC by selecting a current control reference voltage, $V_{REF}$, and comparing the current control reference voltage, $_{REF}$, to a voltage at a mid-point between two calibration output voltages, $V_{OUT}$-1 and $V_{OUT}$-2. The current calibration circuit 1050 determines settings for each of the sets of current control bits CC, CCB and CCC for each 4-PAM output voltage such that $V_{OUT}$-1 and $V_{OUT}$-2 provide each adjacent pair of voltage levels to the circuit.

A multiplexor 1052 receives the three 4-PAM reference voltages $V_{REFHI}$, $V_{REFM}$ and $V_{REFLO}$. A select reference voltage signal, SelRef, selects one of the referenced voltages as the selected current control reference voltage, $V_{REF}$. A comparator 1054 compares the selected current control reference voltage VREF to a mid-point voltage Vx and generates a comparison signal.

To generate the mid-point Vx, output driver 1 1056 sinks a first amount of current to provide the first output voltage $V_{OUT}$-1 and output diver 2 1058 sinks a second amount of current to provide the second output voltage $V_{OUT}$-2. Two passgate pairs 1060, 1062, in response to a current control enable and its complementary signal, act as a resistor divider to provide the midpoint voltage, Vx, between the first output voltage, $V_{OUT}$-1, and the second output voltage, $V_{OUT}$-2.

A state machine 1064 includes first, second and third counters, 1066-1, 1066-2 and 1066-3 that provide the first, second and third sets of current control bits, CC, CCB and CCC, respectively. If the comparison signal indicates that the midpoint signal Vx is greater than the reference voltage $V_{REF}$, the state machine 1064 increments an associated set of current control bits by one to increase the amount of current that is sunk by the output driver, thereby decreasing the midpoint voltage. If the midpoint voltage signal Vx is less than the current control reference voltage, $V_{REF}$, the state machine 1064 decrements the associated current control bits by one, thereby increasing the midpoint voltage.

In one embodiment, the current control bits are calibrated during a power-up sequence. The theory of operation for calibrating the current control bits is as follows. The first set of current control bits CC provide the primary amount of current control for each current control block 1040. To compensate for gds distortion, the CCB and CCC current control bits fine tune the amount of current associated with the Gray-coded "11" and "10" signals, respectively. The current control bits are calibrated in the following order: CC, CCB, then CCC.

In alternative embodiments, the current control bits may be calibrated after power-up in response to triggering events, e.g., lapse of a period of time, a change in ambient temperature, a change in power supply voltage, or in response to a threshold number of errors.

Referring also to Figure 4B, the first and main set of current control bits CC are set using the voltage differences between the "00" and "01" symbols. The first set of current control bits CC are set to provide a amount of current to provide the output voltage for the "01" symbol such that $V_{REFHI}$ is placed at the midpoint between the output voltage for the "00" symbol and the output voltage for the "01" symbol.

As shown in Figure 4B, because of gds distortion, without compensation, the voltage difference between the "01" symbol and the "11" symbol is less than the voltage difference between the "00" symbol and the "01" symbol. To compensate for the gds distortion, the output voltage for the "11" symbol is decreased by increasing the amount of current sunk by the output driver. The second set of current control bits CCB are set to increase the current sunk by the output driver such that the output voltage becomes equal to the desired voltage level when the midpoint voltage between output voltage for the "01" and "11" is equal to $V_{REFM}$.

Finally, the third set of current control bits CCC is adjusted such that the midpoint voltage between output voltage for the "11" and "10" is equal to VREFL.

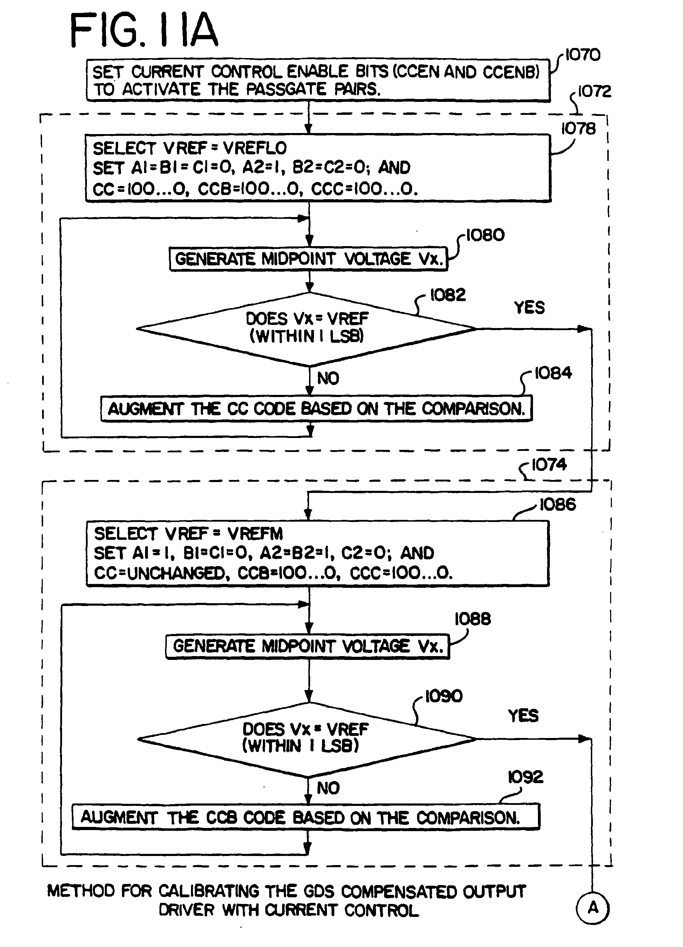

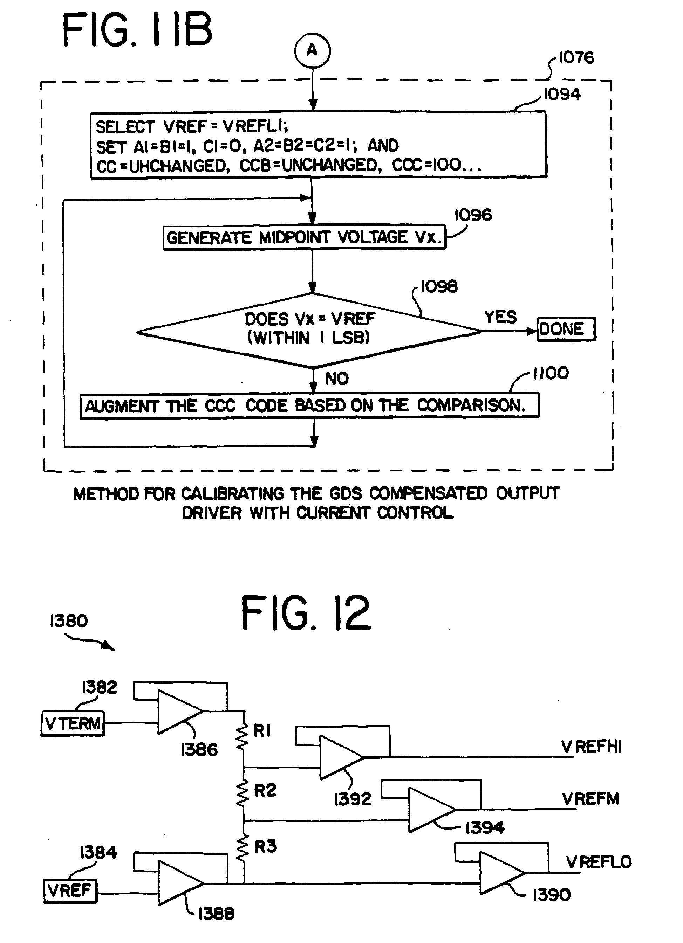

Referring to Figures 10, 11A and 11B, the operation of the circuit 1050 including the state machine 1064 will be described. The flowchart of Figures 11A and 11B uses gray coded output voltages. In step 1070, the current control enable signal (ccen) and its complement (ccenb) are set to activate the passgate pairs 1060 and 1062 and output the midpoint voltage Vx, described above.

Three major blocks of steps 1072, 1074 and 1076 set the current control bits, CC, CCB and CCC, respectively.

In block 1072, step 1078 sets the initial conditions for determining the settings for the first set of current control bits CC. The state machine 1064 outputs the select reference voltage signal (SelRef) which causes the multiplexor 1054 to output the reference voltage $V_{REFHI}$ to the comparator 1054. A "00" symbol is supplied to output driver 1 1056 by outputting multi-PAM bit selection signals A1, B1 and C1 with values of zero. A "01" symbol is supplied to output driver 2 1058 by outputting multi-PAM bit selection signals A2 with a value of one, and B2 and C2 with a value of zero. The initial state of the first, second and third current control bits is as follows:

$$CC = \{1\ 0\ 0\ \ldots 0\};$$

$$CCB = \{1\ 0\ 0\ \ldots 0\};$$

and

$$CCC = \{1\ 0\ 0\ \ldots 0\}.$$

The current control bits are initially set such that the stacked transistor pair sinking the most current will be activated.

In step 1080, the output drivers 1 and 2 output the voltages corresponding to the symbols "00" (the $V_{term}$ reference) and "01" (the drive level under calibration) and the midpoint voltage Vx is generated. In step 1082, the comparator 1054 compares the midpoint voltage Vx to the selected reference voltage $V_{REFHI}$. When the midpoint voltage is within one least significant bit of the reference voltage $V_{REFHI}$, the first set of current control bits have the proper setting. The state machine 1058 determines that the midpoint voltage Vx is within one least significant bit of the reference voltage $V_{REFHI}$ when the current control bits begin to dither between two settings. In other words, the output of the comparator will alternate between a zero and a one.

In step 1084, when the midpoint voltage Vx is not within one least significant bit of the reference voltage $V_{REFHI}$, the state machine 1064 augments the first set of current control bits depending on the result of the comparison. The term "augment" is used to indicate either incrementing or decrementing the current control bits. The process proceeds to step 1080.

If, in step 1082, the state machine 1064 determines that the midpoint voltage Vx is within one least significant bit of the reference voltage, the process proceeds to step 1086 to calibrate the second set of current control bits, CCB.

In step 1086, the initial conditions for calibrating the second set of current control bits CCB are set. The state machine 1064 outputs the select reference voltage signal (SelRef) which causes the multiplexor 1054 to output the reference voltage $V_{REFM}$ to the comparator 1054. A "01" symbol is supplied to output driver 1 1056 by outputting multi-PAM bit selection signals A1 with a value of one, and B1 and C1 with values of zero. A "11" symbol is supplied to output driver 2 1058 by outputting multi-PAM bit selection signals A2 and B2 with a value of one, and C2 with a value of zero. The state of the first set of current control signals CC remains unchanged. The initial state of the second and third sets of current control bits, CCB and CCC, respectively, is as follows:

$$CCB = [\ 1\ 0\ 0\ \dots\ 0\};$$

$$CCC = [\ 1\ 0\ 0\ \dots\ 0\}.$$

In step 1088, the output drivers 1 1056 and 2 1058 output the voltages corresponding to the symbols "01" (the level calibrated in step 1072) and "11" (the level now under calibration), and the passgate pairs 1060, 1062 output the midpoint voltage Vx. In step 1090, the comparator 1054 compares the midpoint voltage Vx to the selected reference voltage $V_{REFM}$. When the midpoint voltage is not within one least significant bit of the reference voltage $V_{REFM}$, as described above with respect to $V_{REFHI}$, in step 1092, the state machine 1064 augments the second set of current control bits CCB by one and the process repeats at steps 1086.

When the midpoint voltage is within one least significant bit of the reference voltage $V_{REFM}$, as described above with respect to $V_{REFHI}$, the second set of current control bits CCB have the proper setting and the process proceed to step 1094 to calibrate the third set of current control bits, CCC.

In step 1094, the initial conditions for calibrating the third set of current control bits CCC are set. The state machine 1064 outputs the select reference voltage signal (SelRef), which causes the multiplexor 1054 to output the reference voltage $V_{REFLO}$ to comparator 1054. A "11" symbol (calibrated in step 1074) is supplied to output driver 1 1056 by outputting multi-PAM bit selection signals A1 and B1 with a value of one, and C1 with a value of zero. A "10" symbol (the level now under calibration) is supplied to output driver 2 1058 by outputting multi-PAM bit selection signals A2, B2 and C2 with a value of one. The state of the first and second sets of current control signals CC and CCB, respectively, remains unchanged. The initial state of the third sets of current control bits CCC is as follows:

$$CCC = \{\ 1\ 0\ 0\ \dots\ 0\}.$$

In step 1096, the output drivers 1 1056 and 2 1058 output the voltages corresponding to the symbols "11" and "10" and the passgate pairs 1060, 1062 output the midpoint voltage Vx. In step 1098, the comparator 1054 compares the midpoint voltage Vx to the selected reference voltage $V_{REFLO}$. When the midpoint voltage is not within one least significant bit of the reference voltage $V_{REFLO}$, as described above with respect to $V_{REFHI}$, in step 1100, the state machine 1064 augments the third set of current control bits CCC by one and the process repeats at step 1094.

In step 1098, when the midpoint voltage is within one least significant bit of the reference voltage $V_{REFLO}$, the appropriate settings for the first, second and third sets of current control bits, CC, CCB and CCC respectively are determined and the calibration is complete.

For the foregoing embodiment, a sequential search is described: starting at an initial value and augmenting. It should be emphasized, however, that alternative search techniques known to those skilled in the art may be used. For example, without limiting the foregoing, successive approximation using a binary search may be used. As a further, although less desirable because it is hardware intensive, alternative, a direct flash conversion may be used.

In Figure 12, a 4-PAM reference voltage generator 1380 generators the multi-PAM reference voltages $V_{REFHI}$, $V_{REFM}$ and $V_{REFLO}$ from external voltages, $V_{TERM}$ and $V_{REF}$, supplied on input pins 1382, 1384 respectively. Unity gain amplifiers 1386, 1388 receive and output the input voltages $V_{TERM}$ and $V_{REF}$ respectively. A voltage divider, including series-connected resistors R1, R2 and R3, is coupled between the outputs of the unity gain amplifiers 1386 and 1388. The lowest voltage $V_{REF}$ is selected to drive $V_{REFLO}$ via a power driver 1390. Power drivers 1392, 1394 are coupled between resistors R3, R2 and R2 to provide reference voltages $V_{REFHI}$ and $V_{REFM}$ respectively. The power drivers 1390-1394 are connected as unity gain amplifiers.

In one embodiment, the resistor values are selected such that resistors R2 and R3 have twice the resistance of resistor R1, and $V_{REF}$, which is supplied externally, is equal to the desired $V_{REFLO}$ voltage.

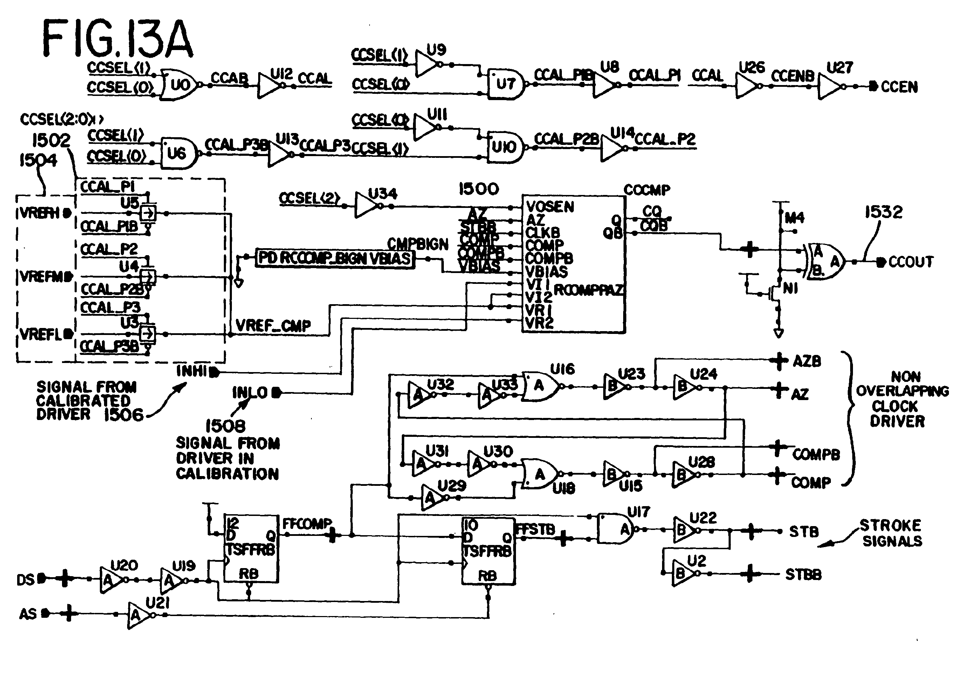

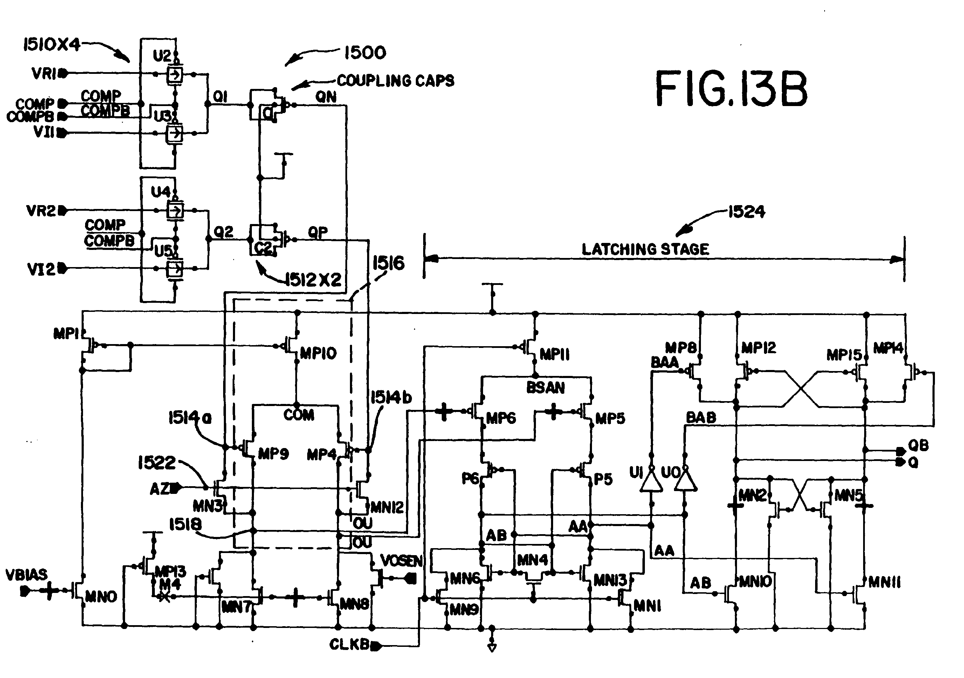

An electrical schematic of a first preferred alternative to the current control calibration circuit of Figure 10 is shown in Figures 13A and 13B. In Figure 13A, a comparator 1500 is coupled by a multiplexor 1502 to a multi-level voltage reference 1504, which in this case includes three discrete levels. One of the three reference voltage levels, $V_{REFHI}$, $V_{REFM}$ or $V_{REFLO}$, is selectively applied to two inputs of the comparator 1500, as further described below. The comparator 1500 is also coupled to receive source calibration signals 1506 and 1508, which are supplied by current mode drivers, such as the 4-PAM driver 1000 shown in Figure 5A. The source calibration signals 1506 and 1508, for the embodiment shown, include a first driver output at a known, or previously calibrated, voltage level on the input line 1506 and an unknown driver output voltage level on the input line 1508, such that the signal on input line 1508 is the signal being calibrated. The comparator 1500 provides an output for adjusting or calibrating the output of the drivers on input line 1508, as further described below, so that the driver output can be reliably received and decoded.

Figure 13B is an electrical schematic of the comparator 1500 shown in Figure 13A. The two inputs from the multiplexor 1502 and the source calibration signals 1506 and 1508 are each coupled to an input of a switch 1510. The outputs of the switches 1510 are combined in pairs and each combined switch output is connected to a coupling capacitor 1512. The coupling capacitors 1512 are connected to opposing inputs 1514a and 1514b of a transistor comparator 1516. The output of the transistor comparator 1516 is the voltage across nodes 1518 and 1520. Two switches 1522 selectively couple the output nodes 1518 and 1520 to the inputs 1514a and 1514b, respectively. The output nodes 1518 and 1520 are coupled to a latching stage 1524.

As illustrated in Figure 13B, the elements of the comparator 1500, including the switches 1510, the coupling capacitors 1512, the amplifier 1516 and the switches 1522, are preferably implemented as semiconductor devices in an integrated circuit. The coupling capacitors 1512 are preferably constructed using MOS transistors connected as capacitors but other embodiments may alternatively use other capacitor types. Those skilled in the art of integrated circuit design will appreciate that, as a result of process variation, there is likely to be a random offset voltage associated with the transistor comparator 1516. In other words, if the same voltage is applied at the inputs 1514a and 1514b, a finite voltage will appear across output nodes 1518 and 1520, rather than the ideal case in which the output nodes 1518 and 1520 are at the same potential. While the offset voltage is not typically significant for systems using binary or 2-PAM signaling, it is preferable to correct for the offset voltage in systems using four or more signal levels, such as a 4-PAM system.

The comparator 1500 of Figure 13B therefore includes offset cancellation circuitry. Specifically, the coupling capacitors 1512 and the switches 1522 are operable to provide offset cancellation as follows. During the cancellation phase, which may also be referred to herein as the auto-zero phase, signal az, which is coupled to the gates of the transistor switches 1522, is high. Referring back to Figure 13A momentarily, the signal az is generated by a non-overlapping clock driver, which includes elements U29, U16, U18, etc. The non-overlapping clock driver produces skewed signals, with a delay period between transitions.

Referring again to Figure 13B, when the signal az goes high, the amplifier 1516 is placed into unity gain mode by turning on switches 1522 and the offset voltage is stored on the coupling capacitors 1512. In addition, during the auto-zero phase, the switches 1510 are set to apply, in this particular embodiment, the reference voltage supplied by the multiplexor 1502 and the known output driver voltage 1506 to the coupling capacitors 1512. Thus, during the auto-zero phase, the transistor comparator 1516 samples the difference between the two known voltages as modified by the offset voltage of transistor comparator 1516.

At the end of the auto-zero phase, switches 1522 are opened, placing the amplifier 1516 into a high gain mode, and then there is a momentary delay followed by a compare phase. At the start of the compare phase, the state of the switches 1510 is changed to sample the reference voltage supplied by the multiplexor 1502 and the unknown output driver voltage 1508 onto the coupling capacitors 1512. Because the charge stored from the auto-zero phase is trapped on the coupling capacitors 1512, any change in the input voltages, such as the change to the unknown output driver voltage 1508, produces a voltage across the input nodes 1514a and 1514b of the transistor comparator 1516. This in turn produces an output voltage across the nodes 1518 and 1520 that is preferably latched into a latching stage 1524.

The control logic enables strobing of the latching stage 1524. In accordance with a preferred embodiment, the latch 1524 may be strobed multiple times during a single compare phase. Alternatively, the latch 1524 may be strobed only once during a single compare phase.

In accordance with a preferred embodiment, a current control transistor in the current mode driver is adjusted, for example as described above with respect to Figures 10, 11A and 11B or as described in U.S. Patent No. 5,254,883, based upon the output of the transistor comparator 1516. In accordance with a preferred embodiment, the unknown driver output voltage level on line 1508 is incrementally adjusted, such as by increasing or decreasing the amount of current sunk by the output driver, until the average value of the voltage levels on lines 1506 and 1508 is equal to the reference voltage supplied by the multiplexor 1502.

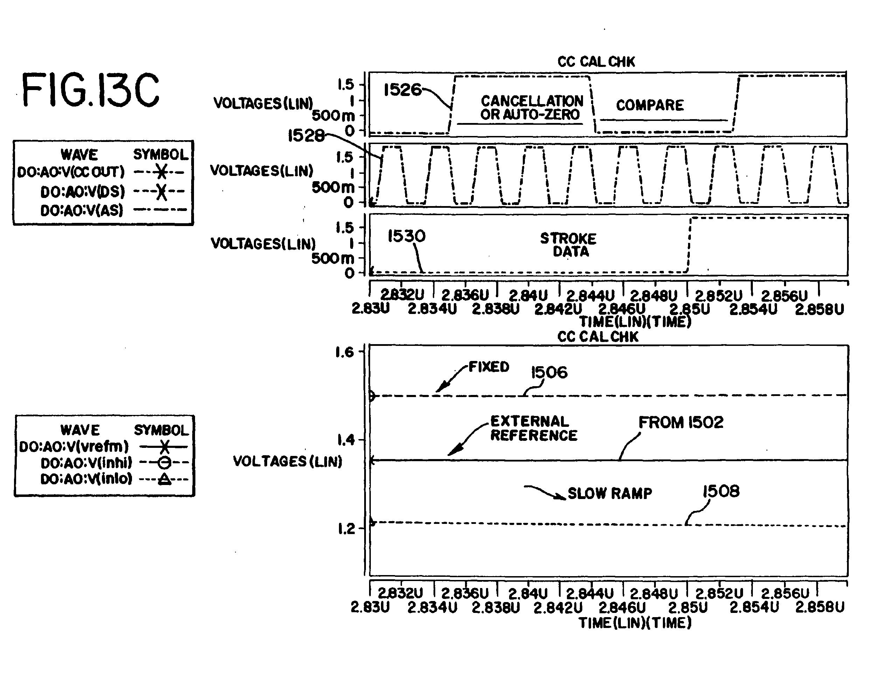

Figure 13C is a timing diagram illustrating the relationship between several of the signals referenced above. The timing signals 1526 and 1528 drive the non-overlapping clock driver in Figure 13A. The auto-zero and compare phases are defined in accordance with the signal 1526. The signal 1530 is the voltage output of the comparator, as shown at pin 1532 in Figure 13A. The known voltage signal 1506 and the known voltage reference from the multiplexor 1502 are essentially constant. The unknown voltage signal 1508 is adjusted, in this example it is decreasing. When the unknown voltage signal 1508 reaches the point where the reference voltage is equal to the average of the signals 1506 and 1508, the output of the comparator circuit 1530 goes high.

The current control calibration circuit shown in Figures 13A and 13B may be utilized as follows to calibrate a 4-PAM output driver, such as the driver of Figure 5A. When the transistors 1002, 1004 and 1006 are in the "off" state the voltage at the output of the current mode driver is $V_{TERM}$. This corresponds to the symbol 00, which is the zero current state and does not need to be calibrated.

The known voltage, $v_{TERM}$, is applied to line 1506 of the comparator 1500 and an unknown voltage generated by turning "on" the transistor 1002 (from Figure 5A) is applied to line 1508 of the comparator 1500. The multiplexor 1502 causes the reference voltage, $v_{REFHI}$, to be applied to the comparator 1500. Using feedback from the output of the comparator 1500, a current control transistor (not shown) coupled in series with the transistor 1002 is adjusted until the average of the voltages on lines 1506 and 1508 is equal to the reference voltage, $v_{REFHI}$. The voltage on line 1508 is now calibrated to correspond with the 4-PAM symbol "01".

At this point, the voltage corresponding to the 4-PAM symbol "01" is applied to line 1506, and an unknown voltage generated by turning "on" the transistors 1002 and 1004 is applied to line 1508. The multiplexor 1502 is activated to cause the reference voltage, $v_{REFM}$, to be applied to the comparator 1500. Using feedback from the output of the comparator 1500, a current control transistor (not shown) coupled in series with the transistor 1004 is adjusted until the average of the voltages on lines 1506 and 1508 is equal to the reference voltage, $v_{REFM}$. The voltage on line 1508 is now calibrated to correspond with the 4-PAM symbol "11".

Next, the voltage corresponding to the 4-PAM symbol "11" is applied to line 1506, and an unknown voltage generated by turning "on" the transistors 1002, 1004 and 1006 is applied to line 1508. The multiplexor 1502 is activated to cause the reference voltage, $v_{REFLO}$, to be applied to the comparator 1500. Using feedback from the output of the comparator 1500, a current control transistor (not shown) coupled in series with the transistor 1006 is adjusted until the average of the voltages on lines 1506 and 1508 is equal to the reference voltage, $v_{REFlo}$. The voltage on line 1508 is now calibrated to correspond with the 4-PAM symbol "10".

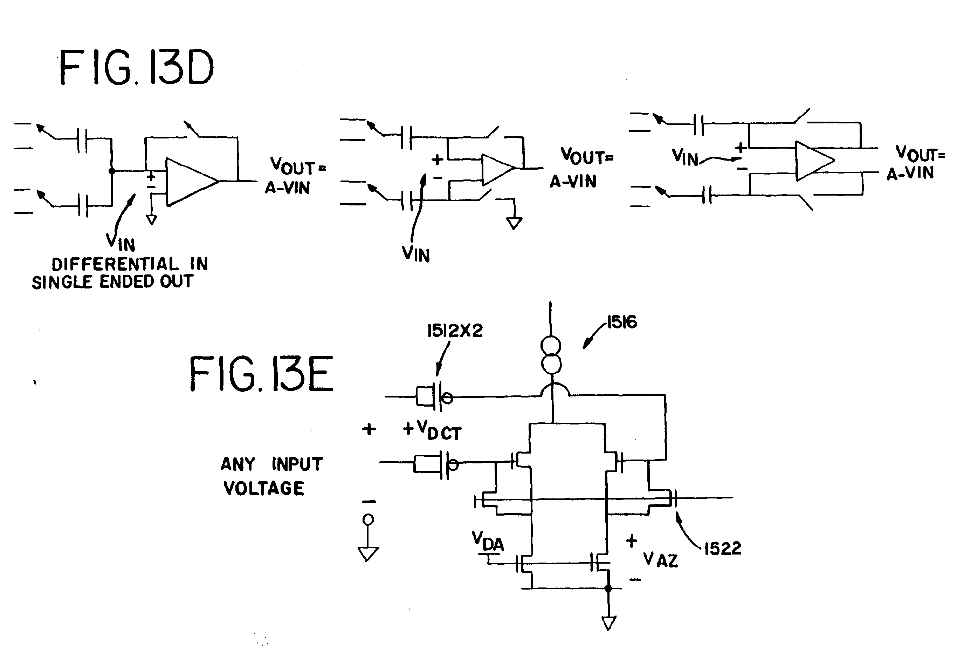

Those skilled in the art of circuit design will appreciate that the comparator 1500 may take other forms. Figure 13D illustrates alternative embodiments for the differential comparator of Figure 13B.

Referring again to Figure 13B, it will be appreciated that if, for example, the comparator 1500 is implemented as an integrated circuit, then the coupling capacitors 1512 may be implemented using a PMOS FET topology as shown in Figure 13E. Such capacitors operate linearly when the applied voltage, $v_{DC}$, is greater than the magnitude of the threshold voltage, $v_T$, of the PMOS FET. The averaging and offset cancellation functions of the comparator 1500 are not optimally realized when the capacitors are operated in the non-linear range. It is therefore preferred that the applied voltage be kept within the linear range. In accordance with a preferred embodiment, the applied voltage is within the range of approximately 1.0 volts to 1.8 volts. The auto-zero voltage, $v_{AZ}$, may be approximately 0.6 volts.

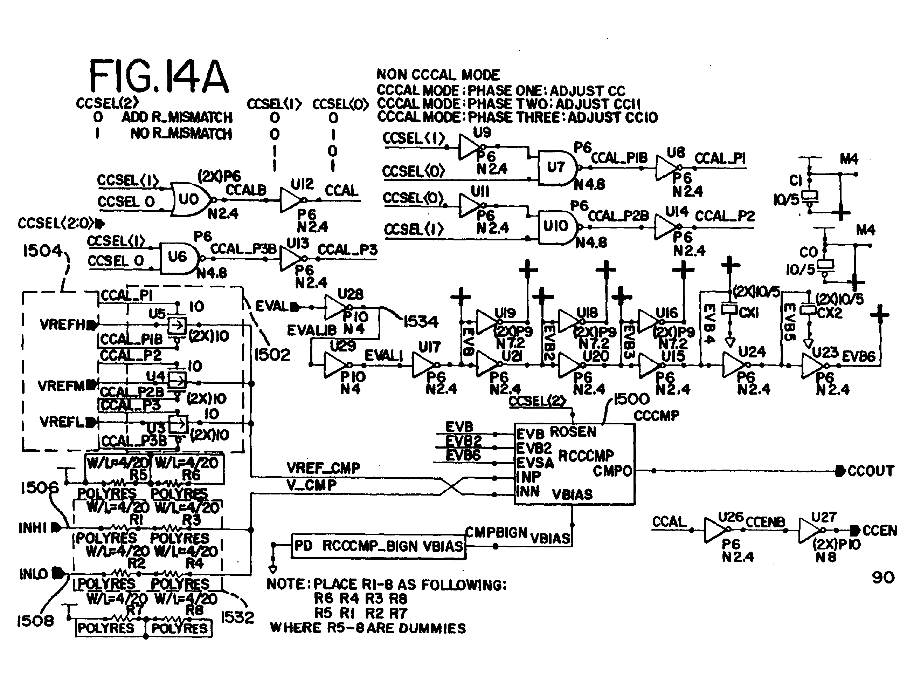

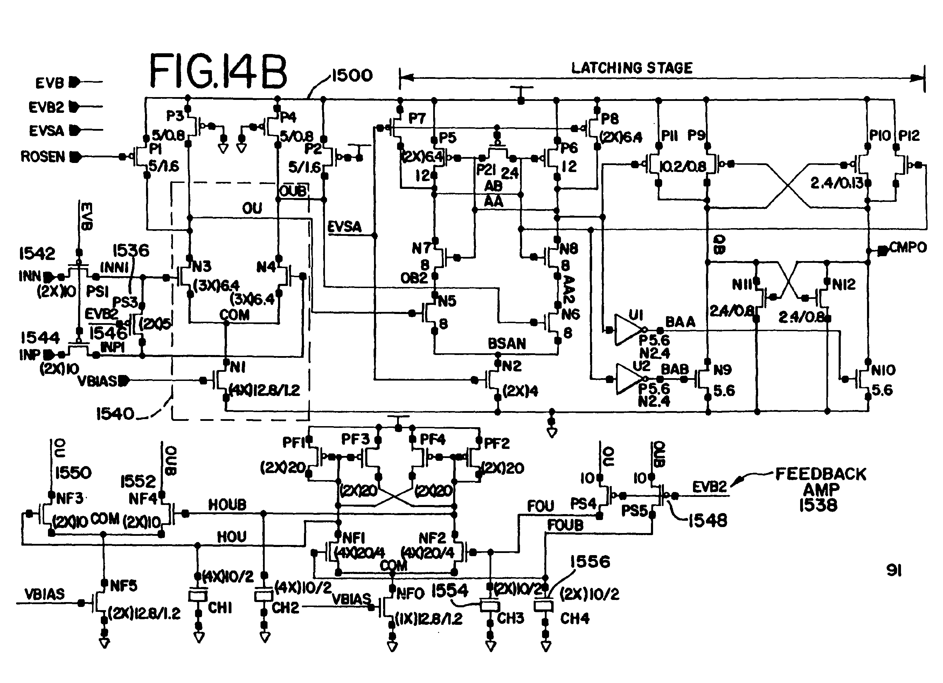

An electrical schematic of another preferred alternative to the current control calibration circuit of Figure 10 is shown in Figures 14A and 14B. As shown in Figure 14A, this embodiment includes a comparator 1500, a multiplexor 1502, multi-level voltage reference 1504, and source calibration signals 1506 and 1508, which carry a known voltage signal and an unknown (to be calibrated) voltage signal, respectively. In comparison to Figure 13A, the circuit of Figure 14A differs in that it includes a resistive voltage combiner 1532 that is coupled to provide the average of the signals on lines 1506 and 1508 to the comparator 1500. In addition, for the embodiment of Figure 14A, the non-overlapping clock driver is replaced by an inverter delay chain 1534.

As shown in Figure 14B, the comparator 1500 differs from that of Figure 13B. Notably, a different offset cancellation technique is utilized. For the embodiment of Figure 14B, a switch 1536 and feedback amplifier 1538 are used to compensate for the offset voltage associated with a differential amplifier 1540.

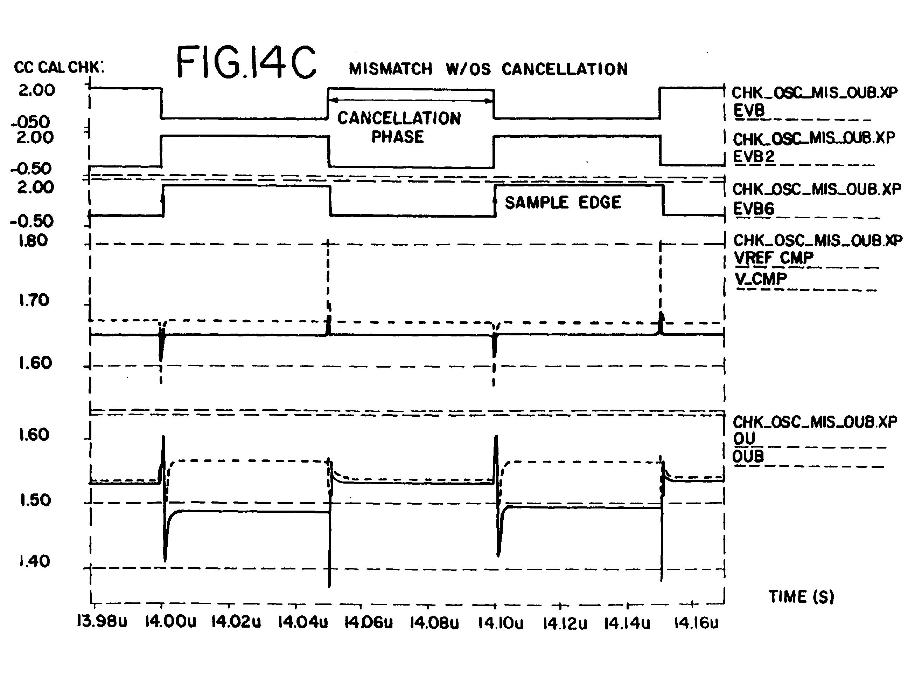

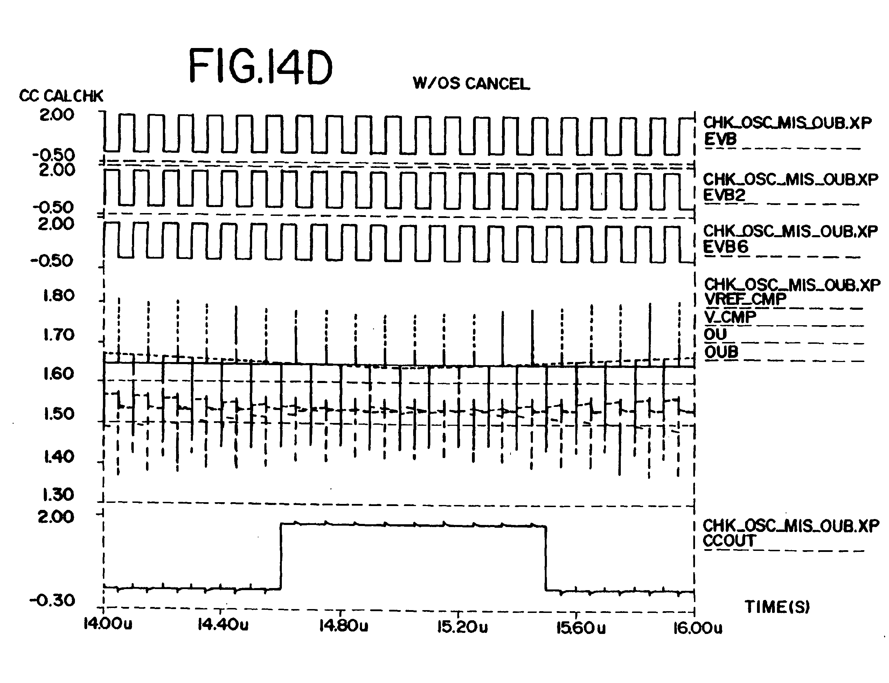

The operation of the embodiment shown in Figures 14A and 14B will now be described. The timing of the offset cancellation phase and the compare phase are controlled by the inverter delay chain 1534. The inverter delay chain 1534 produces skewed signals evb, evb2, evb6, etc, shown in Figures 14C and 14D. The delay between these signals is approximately the delay of one or more logic gates. The delay period may be augmented by loading the gate outputs with additional capacitance.

During the cancellation phase, the feedback amplifier 1538 senses the offset voltage associated with the differential amplifier 1540 as follows. When timing signal evb2 goes low, the inputs 1542 and 1544 of the amplifier 1540 are shorted together by a switch 1546. At the same time, a switch pair 1548 couples the outputs of the amplifier 1540 to the inputs of the feedback amplifier 1538. With the inputs 1542 and 1544 of the amplifier 1540 being shorted together, any voltage appearing at the output of the amplifier 1540 may be characterized as an output offset voltage. The feedback amplifier 1538 produces output current in the drains of transistors 1550 and 1552 in an amount that is proportional to the output offset voltage. The current supplied by the feedback amplifier 1538 works to drive the output offset voltage to zero, thereby balancing the amplifier 1540 when its inputs 1542 and 1544 are shorted. The resultant voltage required to produce the balancing current in the feedbac amplifier 1538 is stored on the capacitors 1554 and 1556 at the end of the cancellation phase when the switches 1548 are opened.

As shown in Figures 14C and 14D, shortly after the cancellation phase ends on the falling edge of the signal evb, the switches 1546 and 1548 are opened, disconnecting the feedback amplifier 1538 and coupling the inputs 1542 and 1544 to the amplifier 1540, as the signal evb2 goes high. The transition of evb2 to high starts the compare phase. Momentarily after the compare phase starts, the signal evb6 goes high, activating the latching stage of the comparator 1500. When the latching stage is active, the output voltage of the differential amplifier 1540 is latched.

The current control calibration circuit shown in Figures 14A and 14B may be utilized to calibrate a 4-PAM output driver in the same manner as described above with respect to Figures 13A and 13B.

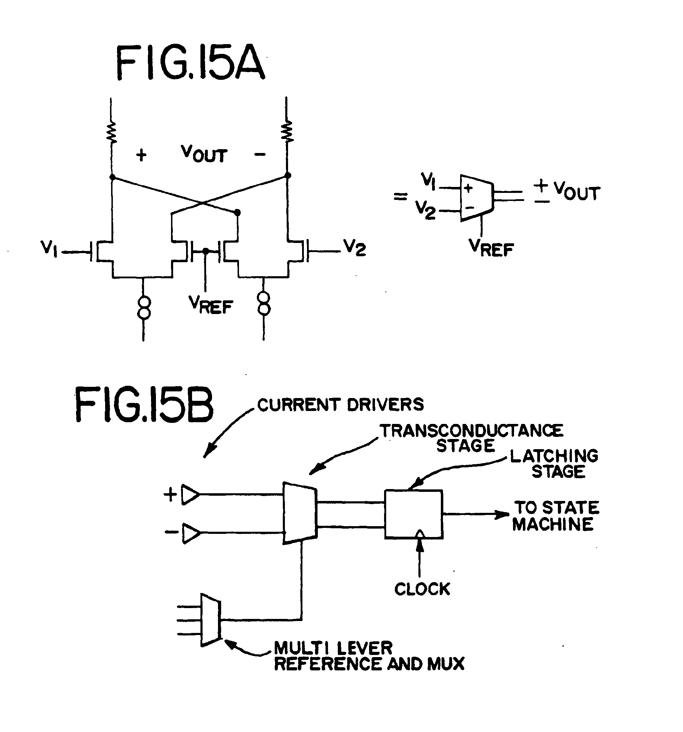

Figure 15A is an electrical schematic of a linear transconductor. In a linear region of operation, the output voltage, $v_{OUT}$, is proportional to the difference between the input voltages, $v_1$ and $v_2$. Thus, the output of the linear transconductor is balanced, i.e. $v_{OUT} = 0$, When $v_1 - v_{Ref} = v_{Ref} - v_2$, or $(v_1 + v_2)/2 = V_{Ref}$.

In accordance with yet another alternative embodiment, therefore, the comparator comprises a transconductor stage, as shown in Figure 15B. For this embodiment, an offset canceling amplifier, such as the amplifier 1538 of Figure 14B, is preferably utilized.

Reference Voltage Generator in Systems Using Equalization or Crosstalk Cancellation

Referring back to Figure 1, the output drivers 323 and receivers 324 can operate, for example, in either 2-PAM or 4-PAM mode. In one embodiment, the control, address and data signals use the same multi-PAM mode, such as 4-PAM. However, because 4-PAM may be more susceptible to errors from noise than 2-PAM, to improve system reliability, in another embodiments, signals on the bus may use the 2-PAM mode. Additionally, data may alternate between the 2-PAM and 4-PAM mode. For example, a pattern generator may be coupled to the memory controller 321 and may be used to periodically determine whether to operate the system at 2-PAM or 4-PAM. In one embodiment, the pattern generator may be arranged to periodically determine an error rate in the system, and if the error rate is above a predetermined threshold, 2-PAM signaling may be used.

Hereinafter, systems and method for generation reference voltages will be described in reference to multi-PAM systems. However, it should be understood that the methods and systems are equally applicable in 2-PAM systems.

As used herein, the term multi-level signaling refers to signaling schemes utilizing two or more signal levels. Multi-level signaling may also be referred to herein as multiple level pulse amplitude modulation, or multi-PAM, signaling, because the preferred coding methods are based upon the amplitude of the voltage signal. Other known multi-level signaling techniques may alternatively be used. Further, although the multi-level signaling of the preferred embodiments will be described with respect to current source drivers, different or equivalent drivers could also be used.

Output drivers 323 generate, and receivers 324 detect, multi-PAM signals that allow multiple (k) bits to be transmitted or received as one of $2^k$ possible voltages or data symbols at each clock edge or once per clock cycle. For example, one preferred embodiment is a 4-PAM system in which two bits are represented by $2^2$ or four voltage levels, or data symbols, and the two bits are transferred at every clock edge by transferring an appropriate one of the four voltage levels. Therefore, the data rate of a 4-PAM system is twice that of a binary or 2-PAM system.

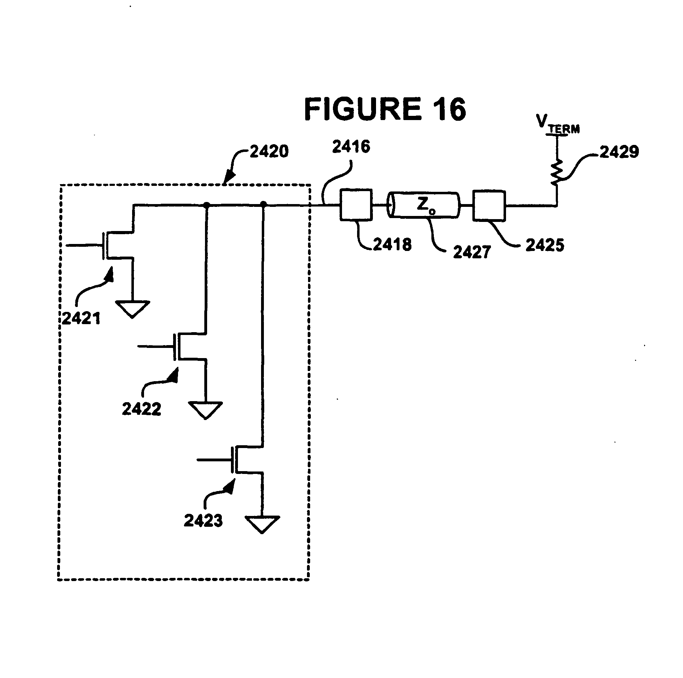

Figure 16 shows a representation of a communication system that may be used to create voltage levels of Figure 2. An output driver 2420 drives signals to an output pad 2418 and over a transmission line 2416, which may, for example, be a memory bus or a different interconnection between devices affixed to a circuit board, to be received at a pad 2425. The transmission line 2416 has a characteristic impedance $Z_O$ 2427 that is substantially matched to a terminating resistor $Z_O$ 2429 to minimize reflections. The output driver includes a first transistor current source 2421, a second transistor current source 2422, and a third transistor current source 2423, which collectively produce a current I when all active, pulling the voltage at the pad 2425 down from $V_{TERM}$ by I·Zo, signaling the logical state 10 under the Gray code system. To produce voltage $V_{OUT} = V_{TERM}$, signaling the logical state 00, current sources 2421, 2422, and 2423 are all turned off. To produce voltage $V_{OUT}$ equal to $V_{TERM} - 1/3 (I \cdot Zo)$, signaling the logical state 01, one of the current sources is turned on, and to produce voltage $V_{OUT}$ equal to $V_{TERM} - 2/3 (I \cdot Zo)$, two of the current sources are turned on. The logical level 00 is chosen to have zero current flow to reduce power consumption for the situation in which much of the data transmitted has a MSB and LSB of zero. The reference levels are set halfway between the signal levels, so that $VREFH = VTERM - (1/6) I \cdot Z_0$, $VREFM = VTERM - (1/2) I \cdot Z_0$ and $VREFL = VTERM (5/6) I \cdot Z_0$. Related disclosure of a multi-PAM signaling system can be found in U.S. Patent Application Serial Number 09/478,916, entitled Low Latency Multi-level Communication Interface, filed on January 6, 2000. Also it is herewith referred to a Provisional U.S. Patent Application entitled, "A 2Gb/s/pin 4-PAM parallel bus interface with transmit crosstalk cancellation & equalization and integrating receivers," filed on even date herewith, by Express Mail Label No.EK533218494US, inventors Pak Shing Chau et al.

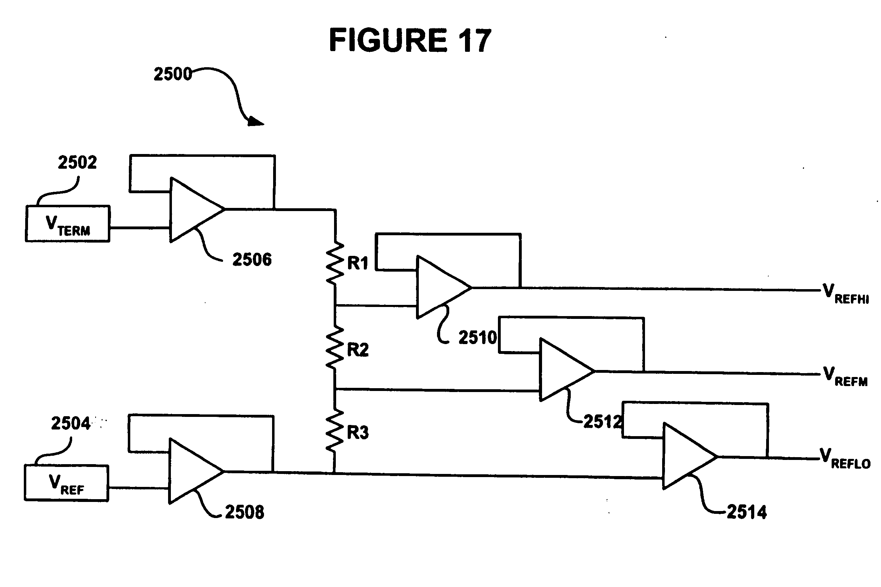

Figure 17 illustrates an exemplary 4-PAM reference voltage generator 2500 that generates the multi-PAM reference voltages $V_{REFHI}$, $V_{REFM}$ and $V_{REFLO}$ from external voltages, $V_{TERM}$ and $V_{REF}$, supplied on input pins 2502 and 2504 respectively. Unity gain amplifiers 2506, 2508 receive and output the input voltages $V_{TERM}$ and $V_{REF}$ respectively. A voltage divider, including series-connected resistors R1, R2 and R3, is coupled between the outputs of the unity gain amplifiers 2506 and 2508. The lowest voltage $V_{REF}$ is selected to drive $V_{REFLO}$ via a power driver 2514. Power drivers 2510, 2512 are coupled between resistors R1, R2 and R3 to provide reference voltages $V_{REFHI}$ and $V_{REFM}$ respectively. The power drivers 2510-2514 are connected as unity gain amplifiers.

In one embodiment, the resistor values are selected such that resistors R2 and R3 have twice the resistance of resistor R1, and $V_{REF}$, which is supplied externally, is equal to the desired $V_{REFLO}$ voltage.

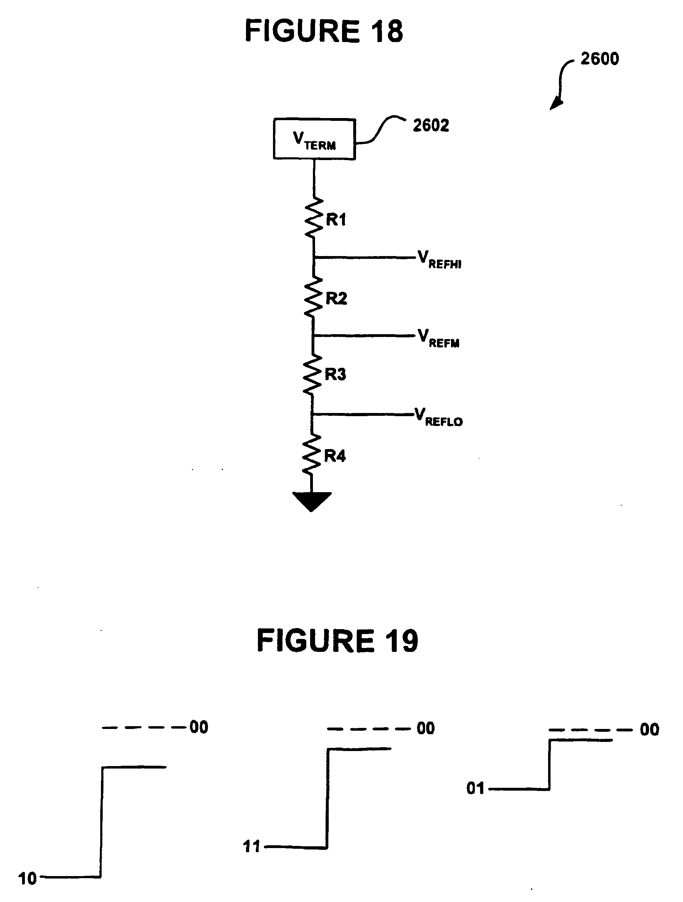

Figure 18 illustrates an alternative embodiment of a 4-PAM reference voltage generator 2600 for generating the multi-PAM reference voltages $V_{REFHI}$, $V_{REFM}$, and $V_{REFLO}$ from the external voltage $V_{TERM}$ supplied on an input pin 2602. A voltage divider, including series-connected resistors R1, R2, R3, and R4, is coupled between the $V_{TERM}$ and a ground voltage supplied on an input pin 2602. In one embodiment, the resistor values are chosen so that the compromise between the static power consumption and noise immunity is achieved. Thus, the resistor values may be selected so that not too much static power is burned, and, further, so that reference voltages are not susceptible to noise injection. However, it should be understood that the reference voltage generation is not limited to the use of the voltage generators illustrated in Figure 17 or Figure 18, and different or equivalent reference voltage generators may alternatively be used.

For cases in which attenuation of a signal exists between the signal's reception and transmission, different amounts of signal loss may occur depending upon the magnitude of the transition between logic levels. Figure 19 illustrates attenuation levels associated with three transition states. For instance, transitioning between the 10 state and the 00 state may have a greater signal deficiency than a transition between the 11 state and the 00 state, which in turn may have a greater signal deficiency than a transition between the 01 state and the 00 state, while maintaining the same logic state over plural bit periods may have no attenuation error. Thus, while the correct dc-level will eventually be achieved, each transition between states may have a different error associated with it.

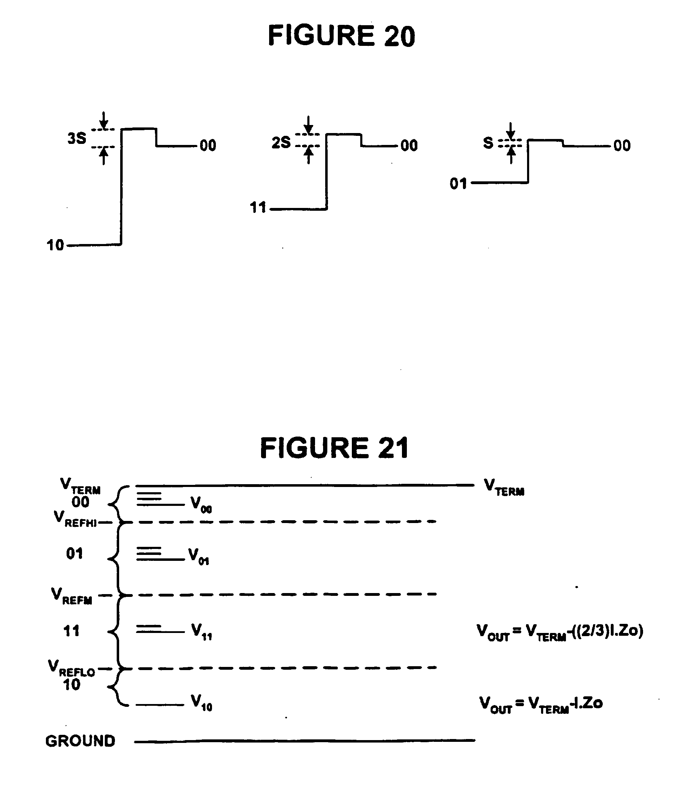

Figure 20 illustrates the addition of a different equalization signal 3S, 2S, or S to the main signal when driving different transitions to compensate for the attenuation of the received signal. The equalization signal in this embodiment are transitory, so that each signal may, for example, have a duration less than or equal to one bit signal, after which the equalization signal is terminated, allowing the initially overdriven signal to maintain a steady state logic level. In other words, the equalization signals S, 2S or 3S add predetermined high-frequency components to the transition signals that raise the slope of the edge of transition. However, a difficulty with this approach for a system such as shown in Figure 16 is that the voltage can only be pulled down from the $V_{TERM}$, unless negative current could flow through the current sources 2421, 2422, and 2423. In other words, with the 00 level set at the $V_{TERM}$, as illustrated in Figure 2, it is difficult for the equalization signals S, 2S or 3S to add to the transition above the $V_{TERM}$.

Figure 21 depicts a multi-level (4-PAM) signaling system in which the 00 logic is reduced below $V_{TERM}$ by a predetermined amount in order to allow overdriving a transition, for example, from the 10 state to the 00 state by a predetermined equalization signal such as 3S via release of the pulldown current. This 00 logic level may be provided by having none of the main current drivers turned on and three equalization drivers turned on, to produce a voltage level of 0M+3S. The logical state 10 can be pulled lower, if necessary, to overdrive a transition, and it is characterized by having three main drivers turned on, for a total voltage level of 3M+0S. The logical state 01 is pulled down and may have a voltage of 1M+2S, while the state 11 may have a voltage of 2M+1S.

Table 3 illustrates drive signal levels involved in transitioning between the logical states of Figure 21.

Table 3.

| From | To | First Received Signal | Transition drive Signal | Second Received Signal |
|------|-----|-----------------------|-------------------------|------------------------|
| 00 | 10 | 0M+3S | 3M+3S | 3M+0S |
| 00 | 11 | 0M+3S | 2M+3S | 2M+1S |
| 00 | 01 | 0M+3S | 1M+3S | 1M+2S |
| 01 | 00 | 1M+2S | 0M+2S | 0M+3S |
| 01 | 11 | 1M+2S | 2M+2S | 2M+1S |
| 01 | 10 | 1M+2S | 3M+2S | 3M+0S |
| 11 | 00 | 2M+1S | 0M+1S | 0M+3S |
| 11 | 01 | 2M+1S | 1M+1S | 1M+2S |
| 11 | 10 | 2M+1S | 3M+1S | 3M+0S |
| 10 | 00 | 3M+0S | 0M+0S | 0M+3S |
| 10 | 01 | 3M+0S | 1M+0S | 1M+2S |
| 10 | 11 | 3M+0S | 2M+0S | 2M+1S |

In order to transition from the initial state 00 (0M+3S) to the final state 10 (3M+3S), for example, an overdriven transition drive signal of 3M+3S is provided. Conversely, changing from the initial state 10 (3M+0S) to the final state 00 involves a drive signal of 0M+0S. The transition drive signal in this example has an overdriven duration that is equal to that of one bit (or dual-bit) signal, although in general an overdriven period of a drive signal may have a duration that is less than or greater than that of a bit signal. For example, a drive signal may be overdriven for a first portion of a bit signal time, with a second portion of that signal not being overdriven.

Several characteristics are apparent from the Table 3. First note that for the received signals, the M multiplier is the complement of the S multiplier. Also note that the drive signal S multiplier is equal to the initial S multiplier, while the transition M multiplier is equal to the final M multiplier. Also note that Table 3 illustrates just one set of transition drive signals specific to a 4-PAM signaling system with a single error correction, and may be extrapolated to be used with communication systems having additional signal levels and additional error corrections. For instance, a similar table may be constructed to deal with signal reflections, although such reflections may be either positive or negative and may have a delay of more than one bit signal duration, as measured at the signal receiver. Table 3 illustrates one set of transition drive signals specific to a 4-PAM signaling system with a single error correction. However, it should be understood that the illustrated set of transition signals may be extrapolated to be used with communication systems having additional signal levels and additional error corrections. Further, it should be understand that similar transition drive signals could also be used in 2-PAM systems with equalizaton.

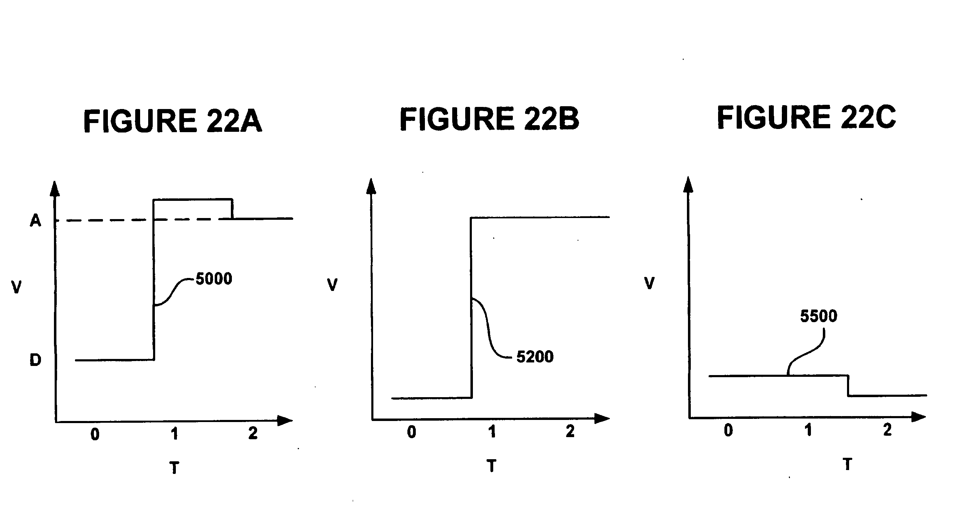

Figure 22A-22C show drive signals that may, for example, represent the transition from state 10 ("D") to 00 ("A"), which for clarity of illustration is then shown to remain at state A for the next bit signal. FIG. 22A shows a signal 5000 with an overdriven transition during period 1 between an initial voltage during period 0 and a final voltage during period 2. The signal 5000 can be made from a combination of a step function signal 5200, shown in FIG. 22B, and a another step function signal 5500, shown in FIG. 22C, that is a scaled, inverted and delayed function of the signal 5200. In this example, the voltage change of signal 5500 is a small fraction of that of signal 5200, delayed by one period, which may be equal to a bit signal duration.

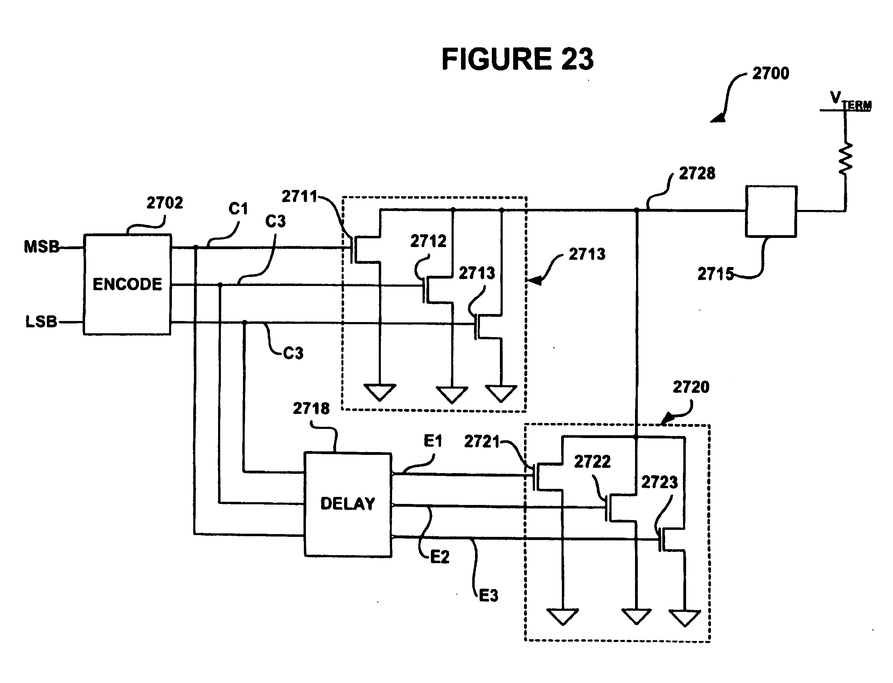

Figure 23 is a schematic block diagram illustrating an exemplary device that may provide the transition drive signals shown in Figure 21. An encoder 2702 receives binary MSB and binary LSB signals and converts pairs of those 2-PAM signals into digital input signals along lines C1, C2 and C3 for a main driver 2705 having three current sources 2711, 2712, and 2713, to convert the binary data of the MSB and LSB into 4-PAM data at an output pad 2715. As illustrated in Figure 23, a delay mechanism 2718 also receives the input signals from the encoder 2702. The delay mechanism 2718 inverts and delays the input signals by a one-bit signal period to feed signals E1, E2, and E3 to an auxiliary driver 2720 including auxiliary driver current sources 2721, 2722, and 2723 that are similar to the respective main driver current sources 2711, 2712 and 2713. However, each auxiliary driver current source 2721, 2722, and 2723 has a gain that is a fraction of the respective main driver current sources 2711, 2712, and 2713. Thus, when the main driver 2705 outputs an output signal, the auxiliary driver 2720 outputs a signal that is delayed, inverted and proportional to the output signal of the driver 2705. The signals generated by the driver 2705 and 2720 combine at the line 2728 to form a desired signal.

Although current sources 2711, 2712, 2713, 2721, 2722 and 2723 are shown as having a single transistor, each of these current sources may include multiple transistors that may differ in power or number from the other current sources. The output voltages of the device 2700 of FIG. 23 would have a distortion, for example, if each of the current sources 2711, 2712 and 2713 were identical, since the drain to source voltage drop for each depends in part on whether the others are active, affecting the current. To compensate for this gds distortion the current sources can differ in number or transistor gain, e.g., by adjusting channel width. Current sources 2711, 2712, 2713, 2721, 2722 and 2723 may also receive additional input signals, for example, to adjust signal strength due to process, voltage and temperature (PVT) conditions. In addition, data may be transmitted at both rising and falling clock edges, so a pair of substantially identical main drivers and auxiliary drivers may exist for driving multi-PAM signals from input signals generated from MSB and LSB odd and even signals.

Auxiliary driver current sources 2721, 2722 and 2723, which may also suffer from gds distortion unless adjusted as described above, drive much less current than the corresponding main driver current sources 2711, 2712 and 2713. For example, each of main driver current sources 2711, 2712 and 2713 may be formed of more current sources than respective auxiliary driver current sources 2721, 2722 and 2723. Alternatively, main driver current sources 2711, 2712 and 2713 may be formed of transistors having wider channels than those of respective auxiliary driver current sources 2721, 2722 and 2723. Thus the output of auxiliary driver current sources 2721, 2722 and 2723 are substantially proportional to the main driver current sources 2711, 2712 and 2713.

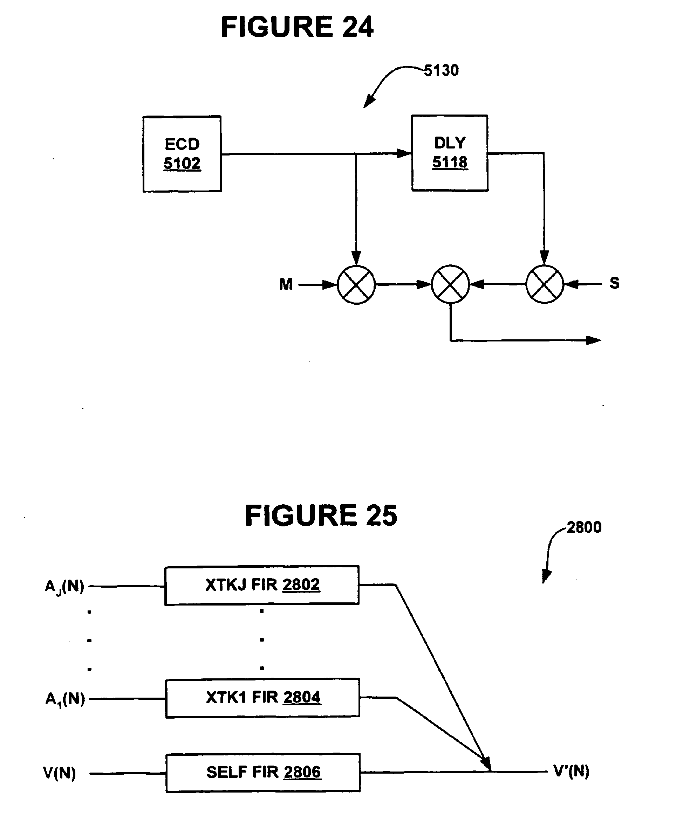

In FIG. 24; the drivers and delay element 5118 are represented as a FIR filter 5130. Input signals from the encoder are sent to the filter, which operates on the signals with function M and delays, inverts and operates on the signals with function S, to output a filtered signal.

Referring to Table 3, the main driver 2705 can be represented with the letter M and the auxiliary driver 2720 can be represented with the letter S, with the numeral proceeding each letter describing how many of the respective current sources are active. A ratio of the gain of the auxiliary driver, S, to that of the main driver, M, is termed k, the equalization coefficient of the auxiliary driver. The ratio k is less than one, and may range from about one percent to about fifty percent. Thus, the driving device on the bus know the equalization current based on the equalization coefficient set on the auxiliary driver. In one embodiment, the drivers 2705 and 2720 and the delay element 2718 of Figure 23 may be represented as an FIR filter, where the input signals from the encoder 2702 are sent to the filter, which operates on the signals to output a filtered signal.

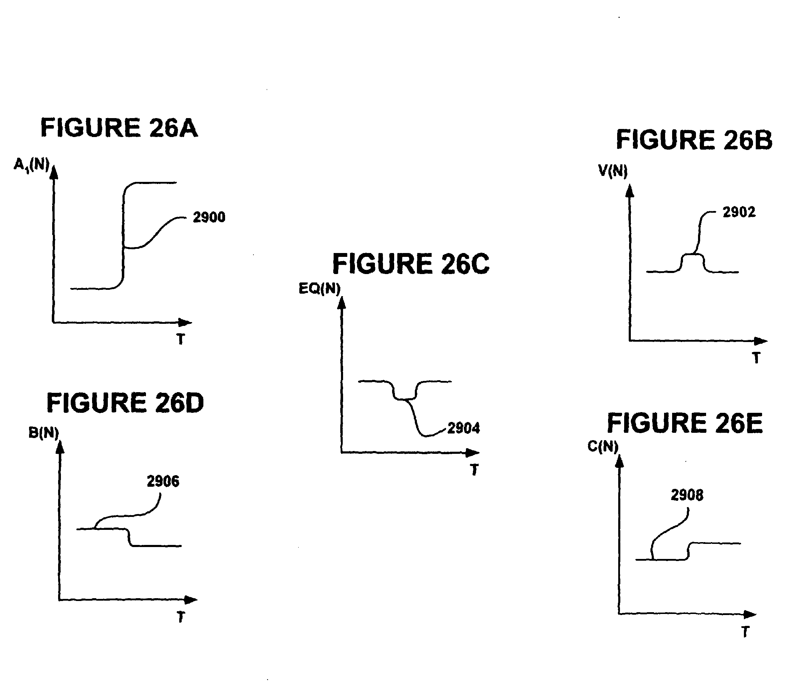

Equalization techniques similar to those described above for the attenuation can be used to compensate for crosstalk and reflection errors. Figure 25 and Figure 26 including Figures 26A, 26B, 26C, 26D and 26E, show a general system using a self equalization FIR filter 2806 and crosstalk (XTK) equalization FIR 2804 and crosstalk equalization FIR filter 2802 for filtering errors on a line V(n) due to crosstalk from adjacent lines $A_1$(n) through $A_J$(n), respectively, to produce equalized output $V_{OUT}$(N).

Figure 26A shows a step function signal 2900 on the line $A_1$ that generates, as shown in Figure 26B, a transient signal 2902 in line V due to inductive coupling. Figure 26C shows an equalization signal 2904 that is generated by inputting the signal 2900 to the crosstalk equalization FIR filter 2804 to compensate for transient signal 2902. Capacitive crosstalk generated in line V from lines $A_1$ through $A_J$ can be equalized in a similar fashion. Both inductive and capacitive crosstalk may generate a transient signal having a polarity dependent upon the location of the receiver compared to the location at which the transient signal was generated. Figure 26D shows a first signal component 2906 that may be used to compensate for such an inductive or capacitive crosstalk error, which is a scaled and inverted function of the signal 2900 that generated the error. Figure 26E shows a second signal component 2908 that may be added to the signal 2906 to create the crosstalk equalization signal 2904 of Figure 26C. The signal 2908 can be scaled or a fractional function of signal 2900 that is delayed one bit period.

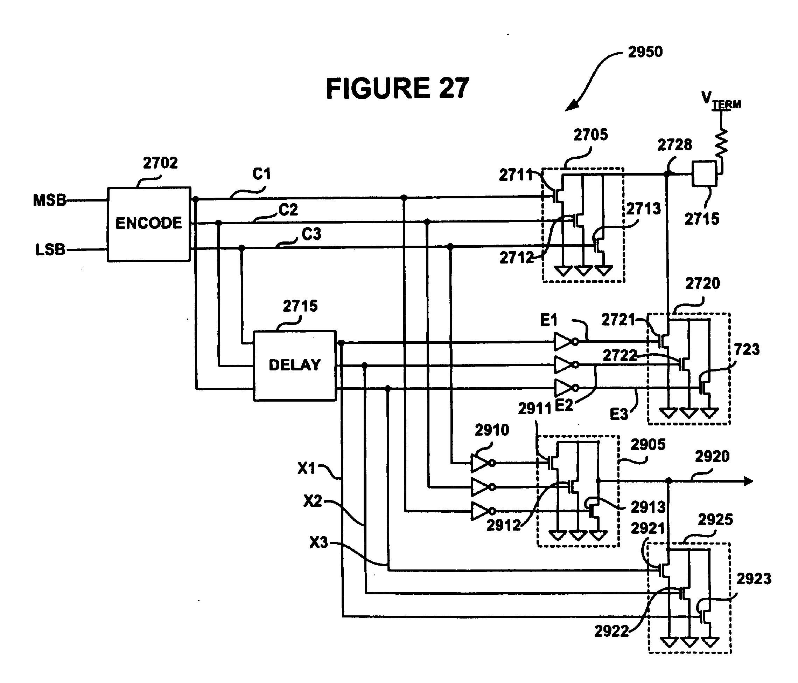

Figure 27 illustrates an exemplary electrical schematic 2950 that may be coupled to a device illustrated in Figure 23 and can be used to equalize inductive or capacitive errors created by signals in line 2728 and sensed in lines that are adjacent to the line 2728. A first crosstalk equalization driver 2905 receives signals along lines P1, P2 and P3 that have been inverted by inverters 2910 controlling current sources 2911, 2912, and 2913. The combined current from the current sources 2911, 2912, and 2913 is output on a crosstalk equalization line 2920 that is connected to an adjacent line, not shown, that is subjected to crosstalk errors from the line 2728. The output on the line 2920 from the driver 2905 is thus scaled and inverted compared to the signal produced by the main driver 2705, much like the signal 2906 of Figure 26D is a scaled and inverted compared to the signal 2900 in Figure 26A.

A second crosstalk equalization driver 2925 receives input signals along lines X1, X2, and X3 that have been delayed by the delay 2715, where the lines X1, X2 and X3 control the current sources 2921, 2922 and 2923. Thus, the output of the second crosstalk equalization driver 2925 on the line 2920 is delayed and scaled compared to the signals produced by the main driver 2705, much like the signal 2908 of Figure 26E is scaled and delayed compared to the signal 2900 in Figure 26A. The combined output of the crosstalk equalization driver 2905 and 2925 on the line 2920 is much like the signal 2904 of Figure 26C, which can be used to compensate for the transient signal 2902 of Figure 26B. Thus, the crosstalk equalization drivers 2905 and 2925 can compensate for the crosstalk inflicted by the line 2728 on nearby lines. Similarly to the equalization cancellation, the crosstalk cancellation employs a predetermined crosstalk cancellation current based on the crosstalk coefficients used in the system. An advantage of the circuit shown in FIG. 12 is that cost and space effective circuits are implemented that generate equalization signals by tapping into the input signals for the main signal driver, instead of generating equalizing signals based upon the output signals that are transmitted.

Similar equalization mechanisms can be used to compensate for reflections in a transmission line due to impedance discontinuities in the line. These reflections may be positive or negative, and may occur at various times relative to the main signal. Thus for example a known reflection may occur at a receiver with a delay of two clock cycles, for which plural unit delay elements may be provided between the input signals and the compensation circuits. Moreover, although a 4-PAM signaling system is shown, additional signal levels are possible with the provision of additional current sources. Unit delay elements may be provided for example by flip-flops, whereas delay elements that generate delays of less than a bit period may be provided for instance by inverters.

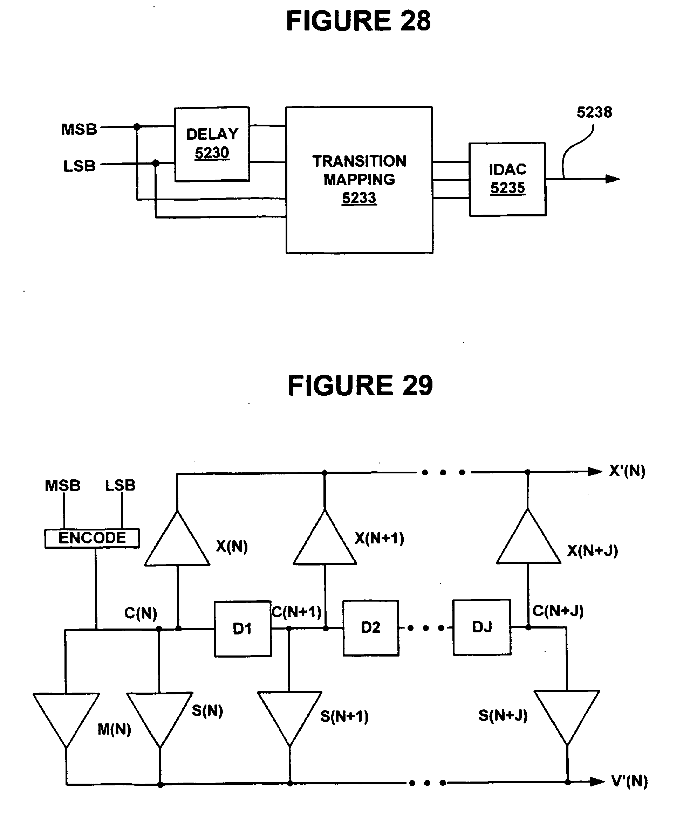

FIG. 28 shows another mechanism for equalizing multi-PAM signals, however the equalization mechanism inputs, on two lines, the MSB and LSB signals, rather than inputting the three lines of thermometer code inputs. A unit delay element 5230 receiving the MSB and LSB outputs those signals with a delay substantially equal to one signal bit duration. Unit delay 5230 allows comparison at transition mapping device 5233 of the MSB and LSB with the previous MSB and LSB, to gauge the multi-PAM transition between the prior and current MSB and LSB. Based upon this transition, transition mapping device 5233 outputs a three bit signal to current digital-analog converter (IDAC) 5235, which drives a compensation signal on line 5237, which in this example connects with a multi-PAM signal, not shown in this figure, to compensate for crosstalk on that other line.

FIG. 29 shows such a general equalization system that can be used to compensate for various signal imperfections, whether the imperfections are due to attenuation, crosstalk, or reflections. Input signals on lines C(N) that control a main driver M(N) pass through a number J of delay elements D1 through DJ, each of which delay the input signals by one bit signal period. Various self-equalization drivers S(N) through S(N+J), each of which is proportional to main driver M(N), are tapped off the input signals at various delay times. The equalization drivers S(N) through S(N+J) may each have a gain that is a different fraction of that of the main driver, and may or may not invert the input signals, depending upon the particular equalization desired. The output of the main driver and each of the equalization drivers are then combined to produce equalized signal V'(N). Various crosstalk-equalization drivers X(N) through X(N+J), each of which is proportional to main driver M(N), are also tapped off the input signals at various delay times, to provide crosstalk compensation signal X'(N) to an adjacent signal line.

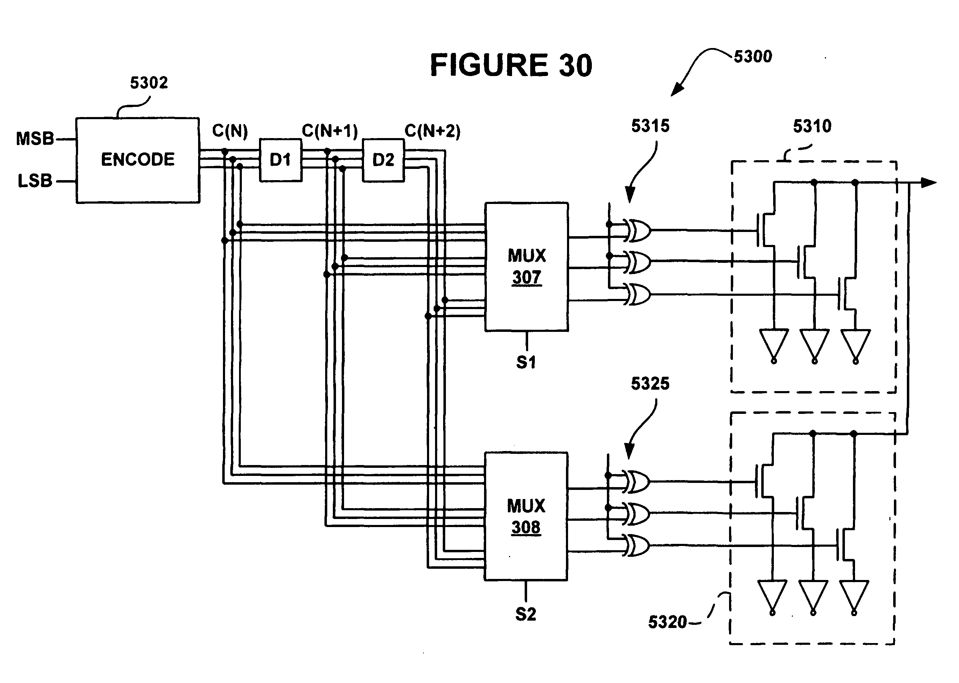

FIG. 30 illustrates a mechanism 5300 for adjusting equalization parameters such as the magnitude, timing and sign of the equalization signal. An encoder 5302 provides input signals on lines C(N) to a main signal driver, not shown in this figure, the input signals also encountering delay elements D1 and D2 that delay the input signals C(N) by one unit delay each, to provide delayed signals on lines C(N+1) and C(N+2). Signals on lines C(N), C(N+1) and C(N+2) are input to multiplexers MUX 5307 and MUX 5308, which choose, based upon selection lines S1 and S2, which of input signals on lines C(N), C(N+1) and C(N+2) to input to equalization drivers 5310 and 5320. As discussed, the equalization drivers may have different current gains. Exclusive OR gates 5315 and 5325 can be controlled to invert or not to invert the input signals selected by multiplexers MUX1 and MUX2. This system can be expanded to provide multiple equalization drivers, XOR gates, multiplexers and delay elements, which together afford a variety of combinations of scaling, timing and inversion of the input signals to produce a desired equalization.

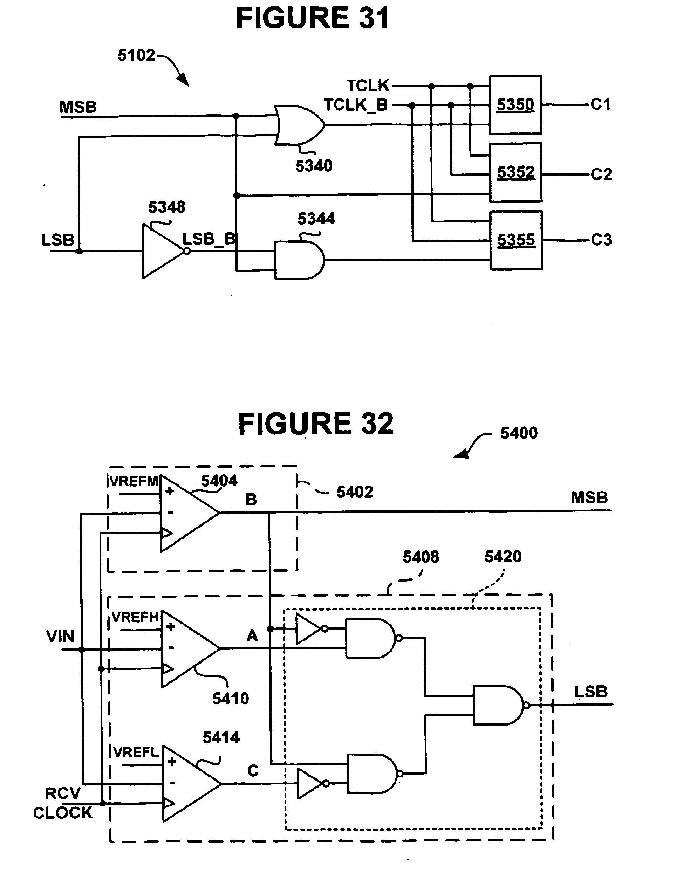

FIG. 31 shows the encoder 5102 that converts MSB and LSB signals into input signals that are output on lines C1, C2 and C3 to control the output driver 105. Data may be transmitted and read at both rising and falling clock edges, so a pair of identical encoders may exist for translating MSB and LSB odd and even signals, with the encoders' output multiplexed on lines C1, C2 and C3. The MSB is input to a latch 5352 that also receives a transmit clock signal (TCLK) and complementary transmit clock signal (TCLK_B) for differentially latching the MSB as an input signal on line C2. The MSB is also input to an OR gate 5340 that receives as the other input LSB. The output of OR gate 5340 is latched at 5350, which outputs another input signal on line C1. The LSB passes through inverter 5348 to become LSB_B, which is input to an AND gate 5344 that receives as the other input the MSB. The output of AND gate 5344 is clocked at 5355 and output on line C3 as a third input signal.

Thus for MSB=0 and LSB=0, all the input signals are off. For MSB=0 and LSB=1, the OR gate 5340 outputs on so that input signal C1 is on, but C2 and C3 are still off. When both MSB=1 and LSB=1, input signals C1 and C2 are on, but AND gate 5344 inputs LSB_B, which is low so the input signal on line C3 is off. When MSB=1 and LSB=0, input signals on all the lines C1, C2 and C3 are turned on. In this fashion the MSB and LSB may be combined as Gray code and translated to thermometer code input signals on lines C1, C2 and C3 that control the current sources to drive 4-PAM signals.

FIG. 32 shows an integrating receiver 5400 that may be used to receive the multi-level signals sent by drivers such as those described above, and decode the signals into MSB and LSB components. As mentioned above, the data may be transmitted at twice the clock frequency, and a pair of receivers 5400 may read even and odd data. An MSB receiver 5402 of the 4-PAM receiver 5400 in this example receives and decodes a 4-PAM input signal VIN by determining whether the signal VIN is greater or less than VREFM. In the MSB receiver 5402, a latching comparator 5404 compares the value of the voltage of the received input signal VIN to the reference voltage VREFM and latches the value of the result of the comparison B in response to a receive clock signal. In one embodiment, data is taken at both rising and falling clock edges. In an LSB receiver 5408 two latching comparators 5410 and 5414 compare the value of the voltage of the received input signal VIN to the reference voltages VREFH and VREFL, and latch the value of the result of the comparison A and C, respectively, in response to the receive clock signal. To decode the LSB, the signals from the comparator outputs B, A, and C are then passed through combinational logic 5420. The latching comparators 5404, 5410 and 5414 are implemented as integrating receivers to reduce the sensitivity of the output signal to noise. This can be accomplished by integrating a comparison of whether the input signal is above or below the reference voltages over most or all of the bit cycle, and then latching the integrated result as the outputs A, B and C. Examples of integrating receivers can be found in above-referenced U.S. Patent Application Serial Number 09/478,916.

Errors generated by crosstalk or capacitive coupling may be attenuated by the time they reach a receiver, which may in circuit board implementations be located up to about a foot away from the signal drivers, much as the transitions are attenuated over that distance. For crosstalk errors this attenuation may actually be beneficial as it tends to smooth out a high-frequency transient signal into a transient signal that may be compensated with an equalization having a duration of one bit. In a situation for which a neighbor's signal still has a high-frequency component when received, an integrating receiver can also smooth the data, so that compensating for a DC component of the crosstalk can be accomplished.

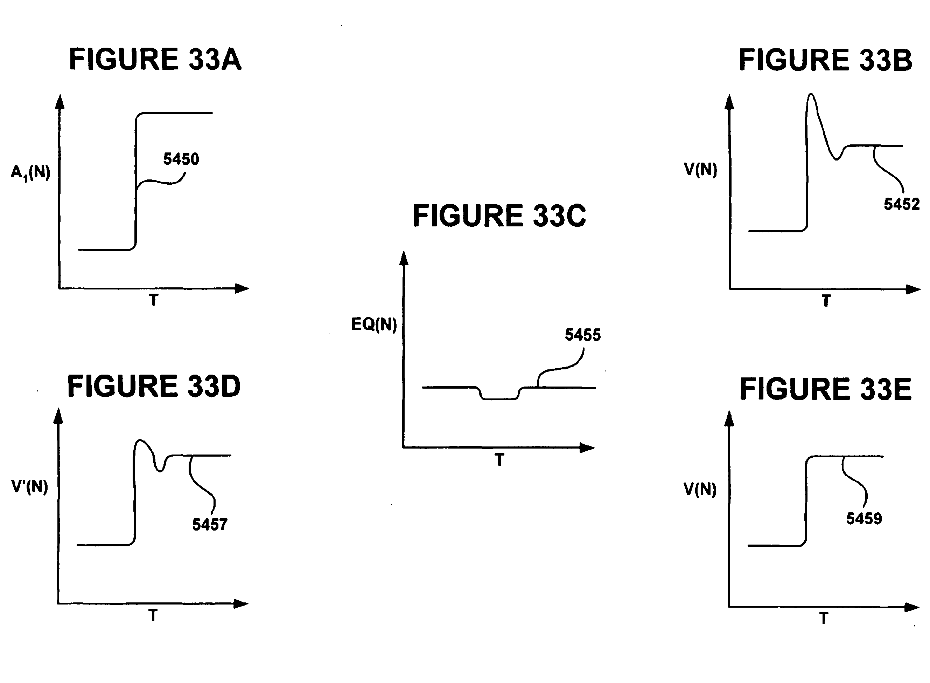

FIG. 33A shows a signal 450 undergoing a transition that may generate crosstalk in an adjacent line having a signal 5452 shown in FIG. 33B. The crosstalk is apparent in FIG. 33B as a spike or high frequency component that is disturbing a step function transition. FIG. 33C shows an equalization signal 5455 designed to compensate for a DC component of the spike of FIG. 33B. Combination of signal 5452 and compensating signal 5455 is shown in FIG. 33D as signal 5457, which may leave a dipole component of the spike uncompensated. FIG. 33E shows that after integration by the receiver of FIG. 32 the dipole component has been removed, leaving a smooth transition signal 5459.

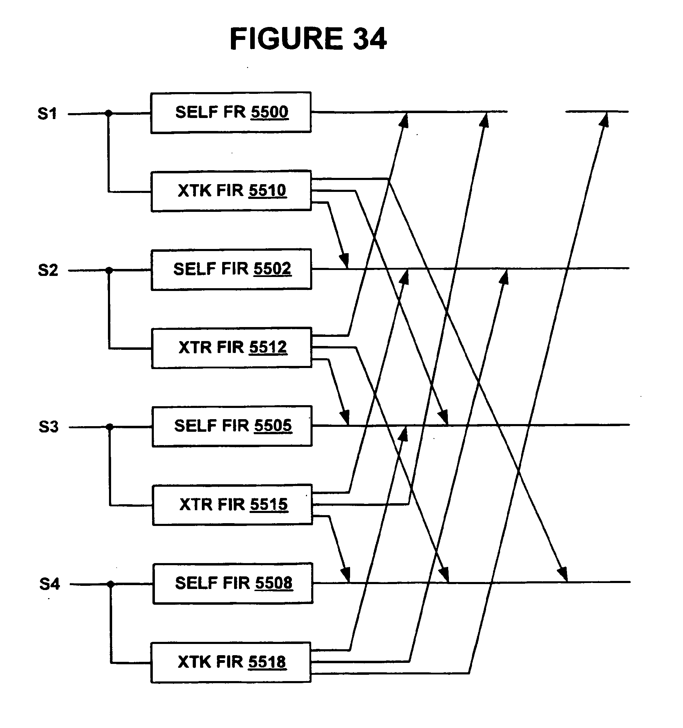

As illustrated in FIG. 34, in a system that has numerous closely spaced signal lines S1, S2, S3 and S4, such as a bus for a computer or similar device, crosstalk may exist between each line and each nearby line. This crosstalk may have characteristics, based upon how many lines are between the crosstalk creator and the crosstalk victim, which can be equalized with an FIR having corresponding equalization characteristics, such as magnitude, timing and sign. Since these crosstalk characteristics have a regular pattern, crosstalk FIRs for each line may have a number of standard equalization drivers each designed to compensate for crosstalk a certain number of lines away. Thus self FIR 5500, self FIR 5502, self FIR 5505 and self FIR 5508 may each have equal ratios k which can be used to compensate for attenuation and reflections. Similarly XTK 5510, XTK FIR 5512, XTK FIR 5515 and XTK FIR 5518 may each have equal ratios k' that depend upon whether a line being equalized is a first adjacent line, second adjacent line, third adjacent line or further spaced from the crosstalk generating and equalizing line.

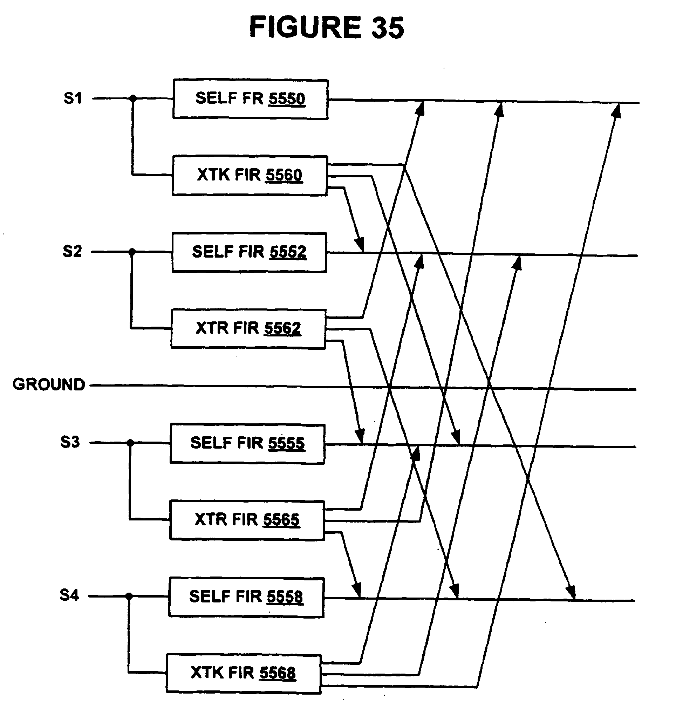

As shown in FIG. 35 spaced signal lines S1, S2, S3 and S4 may be grouped in pairs or other arrangements, for example with a ground wire disposed between the pairs of lines. In this case, crosstalk equalization FIRs 5560, 5562, 5565 and 5568 may distinguish whether a signal line subjected to crosstalk from and adjacent signal line is spaced apart by a ground wire, and adjust the equalization parameters accordingly. Similarly, lines that are adjacent in one area, such as at signal pads for a circuit, may be separated in another area, for example due to routing in separate layers of a circuit board. In this situation, alternately spaced lines, such as S1 and S3, may induce more crosstalk in each other than adjacent lines, such as S1 and S2, and the equalization parameters may be adjusted accordingly.

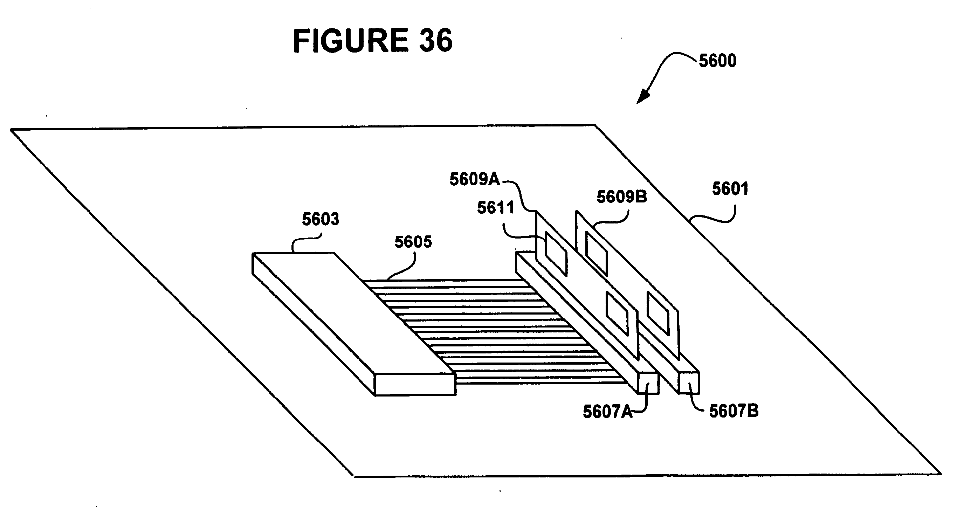

FIG. 36 illustrates a memory system 5600 in which embodiments of the present invention may be applied. The system 5600 includes a printed circuit board 5601 (sometimes called a motherboard) to which a memory controller 5603, a signaling path 5605 and connectors 5607A, 5607B are affixed. Memory modules 5609A, 5609B, each containing one or more memory devices 5611, are affixed to the printed circuit board 5601 by being removably inserted into the connectors 5607A, 5607B. Though not shown in FIG. 36, the memory modules 5609A, 5609B include traces to couple the memory devices 5611 to the signaling path 5605 and ultimately to the memory controller 5603.

In the embodiment of FIG. 36, the signaling path 5605 constitutes a multi-drop bus that is coupled to each memory module. The individual memory devices of a given module may be coupled to the same set of signaling lines within signaling path 5605, or each memory device of the module may be coupled to a respective subset of the signaling lines. In the latter case, two or more memory devices 5611 on a module may be accessed simultaneously to read or write a data value that is wider (i.e., contains more bits) than the data interface of a single memory device. In an alternative embodiment (not shown), each of the memory modules may be coupled to the memory controller via a dedicated signaling path (i.e., a point-to-point connection rather than a multi-drop bus). In such an embodiment, each of the memory devices on the memory module may be coupled to a shared set of signaling lines of the dedicated path, or each memory device may be coupled to respective subsets of the signaling lines.

The signaling path 5605 may include a single, multiplexed set of signal lines to transfer both data and control information between the memory controller 5603 and memory devices 5611. Alternatively, the signaling path 5605 may include a set of signaling lines for transferring data between the memory devices 5611 and the memory controller 5603, and a separate set of signaling lines for transferring timing and control information between the memory devices 5611 and the memory controller 5603 (e.g., clock signals, read/write commands, and address information). Preferably the control information is uni-directional, flowing from the memory controller 5603 to the memory devices 5611, but status information may also be communicated from the memory devices 5611 to the memory controller. Also, the timing information may be generated within the memory controller 5611, or by external circuitry (not shown).

In one embodiment, selected signaling lines within signaling path 5605 are used to carry multi-level signals (e.g., 4-PAM signals) between the memory devices 5611 and the memory controller 5603. For transfers from the memory controller 5603 to a given memory device 5611, a set of driver circuits within the memory controller 5603 output multi-level signals onto the selected traces of the signaling path, with equalization and/or cross-talk cancellation being applied to each such signal as described above. Receiver circuits within the addressed memory device (or memory devices) receive the multi-level signals from the memory controller 5603 and convert the signals into corresponding binary representations. Conversely, for transfers from the memory device 5611 to memory controller 5603 (e.g., in response to a read command issued to the memory device 5611 by the memory controller 5603), driver circuits within the memory device 5611 output equalized and cross-talk-canceled multi-level signals onto the selected set of traces of the signaling path for receipt by receiver circuits within the memory controller 5603. Such multi-level signaling may be used to transfer both data and control information between the memory controller 5603 and the memory devices 5611, or multi-level signaling may be used for one type of information transfer (e.g., data or control), but not the other. Further, the signaling technique used to transfer either data or control information (or both) may be dynamically switched between binary and multi-level signaling according to detected events, such as bandwidth demand, detection of a threshold error rate, and so forth.

Although a memory system that includes connectors for removable insertion of memory modules is depicted in FIG. 36, other system topologies may be used. For example, the memory devices need not be disposed on memory modules, but rather may be individually coupled to the printed circuit board 5601. Also, the memory devices, the memory controller and the signaling path may all be included within a single integrated circuit along with other circuitry (e.g., graphics control circuitry, digital signal processing circuitry, general purpose processing circuitry, etc.). The system of FIG. 36 can be used in any number of electronic devices, including without limitation, computer systems, telephones, network devices (e.g., switch, router, interface card, etc.), handheld electronic devices, intelligent appliances.

As mentioned in reference to Figure 21, in order to compensate for attenuation, crosstalk or reflection errors using, for example, the equalization drivers illustrated in Figure 25, the highest output logic state is reduced below the $V_{TERM}$ and the lower logic states are shifted respectively based on the equalization and/or crosstalk currents that are used on a device to compensate for signal errors. In such an embodiment, the $V_{REFHI}$, $V_{REFM}$ and $V_{REFLO}$ are no longer centered on the shifted data eyes, and, thus do not track errors associated with the current control.

Typically, an electronic device on a bus, such as the bus 302 illustrated in Figure 1, does not set its equalization or crosstalk coefficients until it is assigned to a predetermined signal line, or a signal channel, such as one of the signal lines 320-1 or 320-2 illustrated in Figure 1. However, when a device is put on a signal line, the device adapts a predetermined set of equalization and/or crosstalk coefficients based on the characteristics of the signal line. Thus, any device on the bus, once put on a signal line, has a direct knowledge of its default and crosstalk currents that shift the logic states down in order to allow equalization and crosstalk signals to overdrive logic state transitions. In accordance with a preferred embodiment, the reference voltage levels are shifted correspondingly to the logic state shifts so that the reference voltage levels provide accurate threshold levels.

Exemplary embodiments for reference voltage generation will be described hereinafter in reference to a 4-PAM system. However, it should be understood that the exemplary embodiments are equally applicable in 2-PAM or N-PAM systems.

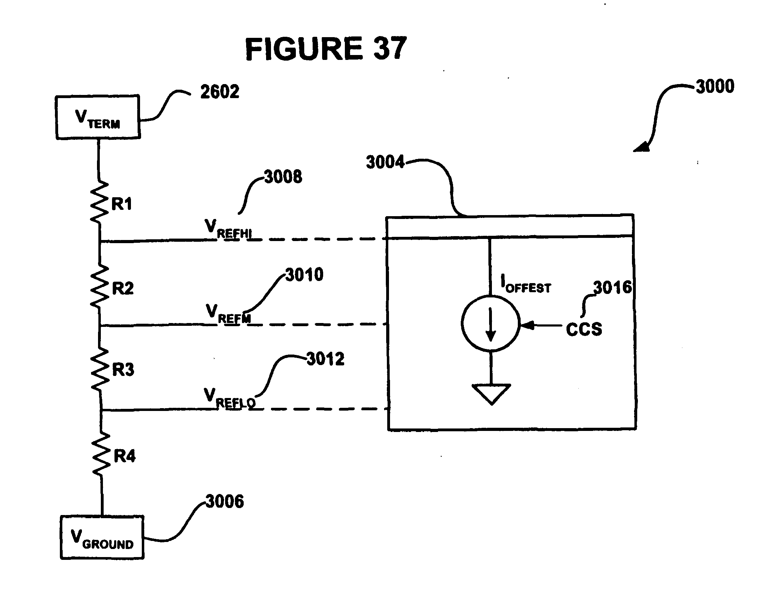

Figure 37 illustrates a 4-PAM voltage generator 3000 that generates the multi-PAM reference voltages $V_{REFHI}$, $V_{REFM}$ and $V_{REFLO}$ from the external voltage $V_{TERM}$ supplied on a voltage pin 3002 using a voltage divider, where the reference voltage levels reflect the shifts in the logic state level shifts in a system employing equalization and/or crosstalk signals. The voltage divider, including series-connected resistors R1, R2, R3, and R4, is coupled between the voltage pin 3002 supplying the $V_{TERM}$ and a voltage pin 3006 supplying a $V_{GROUND}$.

According to an embodiment illustrated in Figure 37, one or more active devices on a channel, such as an active device 3004, level-shifts the reference voltage levels based on the logic state shifts. As mentioned in the preceding paragraphs, the logic states are shifted down based on predetermined equalization and crosstalk currents applied by a device on a bus. As illustrated in Figure 37, the active device 3004 includes an active current source generating an offset current ("$I_{OFFSET}$") that is controlled by one or more current control signals ("CCS") 3016. In one embodiment, the CCS 3016 is controlled by a set of equalization and crosstalk coefficients used by a device on the bus so that the active device 3004 draws a scaled amount of the current used for the highest logic state equalization and crosstalk cancellation. In an embodiment, a scale factor associated with the equalization and crosstalk current corresponds to a ratio of the termination resistor $Z_O$ and the first resistor R1 of the voltage divider. In such an embodiment, the $I_{OFFSET}$ is equal to $I_{EQ,XTC} \cdot (Zo/P1)$, where the $I_{EQ,XTC}$ corresponds to a combined equalization and crosstalk current used by a device on a bus. Thus, the active device 3004 pulls down the reference voltage levels $V_{REFHI}$, $V_{REFM}$ and $V_{REFLO}$ according to the voltage shifts of the logic states. Table 4 illustrates reference voltage levels for the 4-PAM device that may be implemented using the active device illustrated in Figure 37.

Table 4.

| Reference Voltage Level | Output Voltage |
|---|---|
| $V_{REFHI}$ | $V_{REFHI} = V_{TERM} \left( \dfrac{R2 + R3 + R4}{R1 + R2 + R3 + R4} \right) - R1 \cdot I_{OFFSET}$ |
| $V_{REFM}$ | $V_{REFM} = V_{REFHI} \left( \dfrac{R3 + R4}{R2 + R3 + R4} \right)$ |
| $V_{REFLO}$ | $V_{REFM} = V_{REFHI} \left( \dfrac{R4}{R2 + R3 + R4} \right)$ |

According to the output voltage levels illustrated in Table 4, the active device 3004 pulls a predetermined amount of current from the $V_{REFHI}$ level based on the equalization and crosstalk settings used on a device. Further, as illustrated in Table 4, the lower reference voltage levels $V_{REFM}$ and $V_{REFLO}$ are shifted based on the $V_{REFHI}$ level so that the new levels for the $V_{REFM}$ and $V_{REFLO}$ provide accurate threshold levels for the logic states below the highest logic state.

However, it should be understood that more than one active device could also be used, and the present invention is not limited to the use of a single active device. In a bidirectional or multi-drop bus, e.g. a memory bus, having a number of individual drivers, each with different equalization or crosstalk coefficients, each driver on a channel may have an active device to shift the reference voltage levels. In such an embodiment, the amount of current to make the $V_{REF}$ shift may be equal to a ratio of that current to the equalization/crosstalk component so that the current is properly ratioed.

Further, it should be understood that the reference voltage generation according to an exemplary embodiment is not limited to using the voltage generator 3000 illustrated in Figure 37.

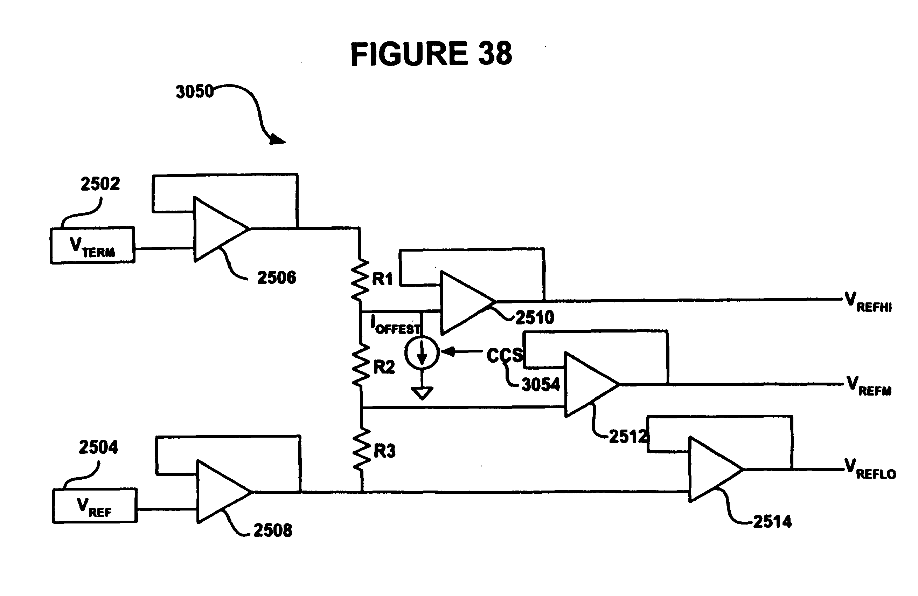

Figure 38 is an electrical schematic 3050 of a multi-level voltage generator that reflects logic state shifts due to equalization or crosstalk cancellation and utilizes the op-amp drive references illustrated in Figure 17. As illustrated in Figure 38, one or more active current sources, such a current source 3052, generates an offset current ("$I_{OFFSET}$") that is controlled by one or more CCS 3054. The current source 3052 shifts the reference voltage levels based on equalization or crosstalk cancellation parameters. In the illustrated embodiment, the offset current pulls down the op-amp reference voltage levels as discussed in greater detail in reference to Figure 37.

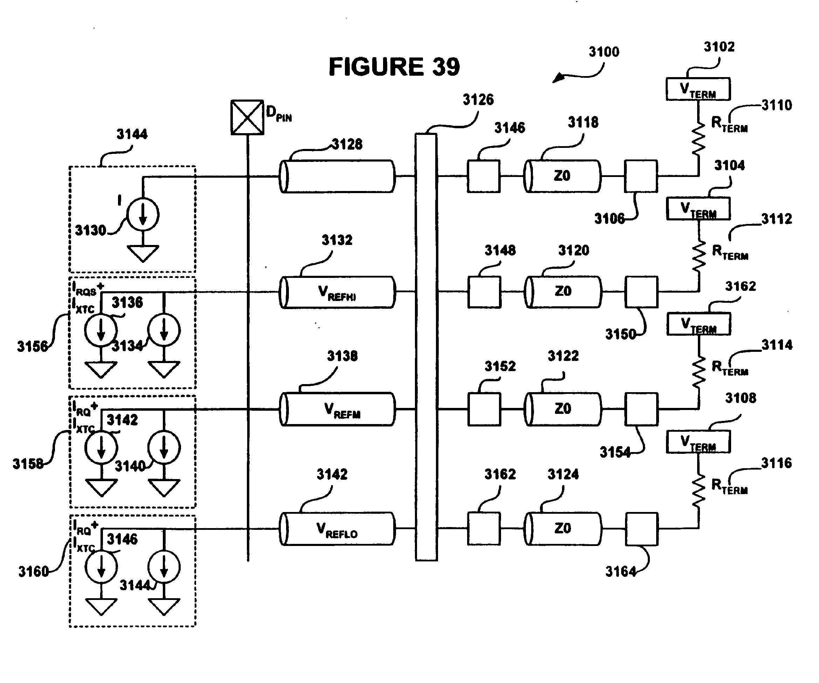

Figure 39 illustrates an alternative embodiment of an electronic circuit 3100 that generates level-shifted reference voltages $V_{REFHI}$, $V_{REFM}$, and $V_{REFLO}$ via on-chip $V_{REF}$ drivers. An output driver 3144 drives signals to an output pad 3146 and over a transmission line having a characteristic impedance $Z_O$ 3118 that is substantially matched to a terminating resistor $R_{TERM}$ to minimize reflection. The output driver 3144 may include three current sources, as illustrated in Figure 16, which together produce a current I 3130 when all are active, pulling the voltage at the pad 3106 down from $V_{TERM}$ by $I \cdot Z_O$, signaling the logical state 10 under the Gray code system, as illustrated in Figure 2. To produce the remaining logical states, some of the transistors in the current drivers are deactivated, as described in reference to Figure 2.

Figure 39 illustrates three additional drivers for generating the $V_{REFHI}$, $V_{REFM}$, and $V_{REFLO}$. For example, the current driver 3156 drives into a terminating resistor $R_{TERM}$ 3112 half of the current that would normally be driven to generate the logical state 01 under the Gray code system and, further, shifts the $V_{REFHI}$ level according to the equalization and crosstalk currents applied on the chip. Thus, the current driver 3134 drives a current I/6 to generate the $V_{REFHI}$ level that is further shifted by the current driver 3136 to compensate for the equalization and crosstalk.

Similarly, to generate the $V_{REFM}$ voltage level, a current driver 3158 drives into a terminating resistor $R_{TERM}$ 3114 three-fourths of the current that would normally be driven to generate the logical state 11 under the Gray code system, and, further, shifts the $V_{REFM}$ level according to the equalization and crosstalk current applied on the chip. Thus, the current driver 3140 drives a current I/2 to generate the $V_{REFM}$ level that is further shifted by the current driver 3142 to compensate for the equalization and crosstalk.

Finally, as illustrated in Figure 39, to generate the $V_{REFLO}$ voltage level, a current driver 3160 drives into a terminating resistor $R_{TERM}$ 3114 five-sixth of the current that would normally be driven to generate the logical state 10 under the Gray code system and, further, shifts the $V_{REFLO}$ level according to the equalization and crosstalk currents applied on the chip. Thus, the current driver 3140 drives a current $5/6 \cdot I$ to generate the $V_{REFLO}$ level that is further shifted by the current driver 3146 to compensate for the equalization and crosstalk. According to one embodiment, the equalization currents 3136, 3142 and 3146 are equal to the voltage shift used to compensate for crosstalk and equalization.

Two reference current generation techniques have been described in reference to Figures 37, 38 and 39. However, any one of those could be eliminated, and an off-chip voltage divider could be used instead. In such an embodiment, for example, the $V_{REFM}$ could be used from a direct-compatible-style board.

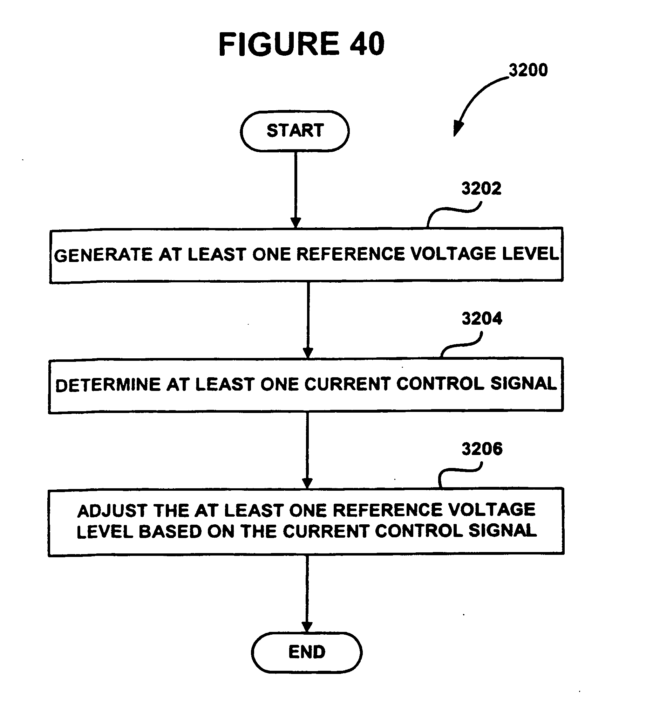

Referring to Figure 40, a method 3200 for generating at least one reference voltage level for a driver employing equalization and crosstalk cancellation will be described.

At step 3202, a reference voltage generator generates at least one reference voltage. For example, in a 2-PAM system, the voltage generator generates one reference voltage, and in a 4-PAM system, the voltage generator generates three reference voltage levels. In one embodiment, the voltage generator may include the reference voltage generators described in reference to Figure 37, 38 or 39; however, different voltage generators could also be used.

At step 3204, at least one current control signal is determined. The at least one current control signal may include an equalization current control signal, a crosstalk current control signal, or the combination of both.

At step 3206, at least one reference voltage level generated by the reference voltage generator is adjusted based on the at least one current control signal determined at step 3204. According to an exemplary embodiment, the at least one reference voltage level is shifted down based on the shift of the highest logic state required by the use of the control signals.

It should be understood that the method 3200 is only an exemplary method, and different or equivalent methods may be used to generate reference voltages based on at least one control signal such as an equalization current control signal or a crosstalk signal.

While the invention has been described in connection with a number of preferred embodiments, the foregoing is not intended to limit the scope of the invention to a particular form, circuit arrangement, or semiconductor topology. To the contrary, the invention is intended to be defined by the appended claims and to include such alternatives, modifications and variations as may be apparent to those skilled in the art upon reading the foregoing detailed description.

**Claims**

1. A communication system comprising:

   a main driver (2705) adapted to receive a plurality of input signals and to output on a first line (2728) a first signal that varies over time between N output levels based on said plurality of input signals, the communication system being
   **characterized by**
   an equalization mechanism including a first auxiliary driver (2720) having a gain that is substantially proportional to and smaller than said first main driver (2705), said first auxiliary driver configured to receive delayed and inverted versions of said first plurality of input signals and to output on said first line a second signal, said second signal being combined with said first signal to form a multilevel signal including transitions among N logic states, wherein a respective logic state is shifted down from a respective one of the N output levels by an amount dependent on the respective logic state, and wherein a respective transition in the multilevel signal is overdriven by an amount dependent on a transition magnitude of the respective transition .

2. The system of claim 1, wherein said main drivers (2705) and equalization mechanism each include a current source (2721, 2722, 2723, 2711, 2712, 2713), and said signal levels are voltages that are in a range between ground and a positive voltage.

3. The system of claim 1, wherein said equalization mechanism further comprises a set of inverters (2910) and a second auxiliary driver (2905) having a gain that is substantially proportional to and smaller than said first main driver (2705), said second auxiliary driver (2905) configured to receive said first plurality of input signals after inversion by said inverters, and to output on a second line adjacent said first line a third signal.

4. The system of claim 3, wherein said equalization mechanism further comprises a third auxiliary driver (2925) having a gain that is substantially proportional to and smaller than said first main driver (2705), said third auxiliary driver configured to receive delayed versions of said first plurality of input signals, and to output on said second line (2920) a fourth signal that is combined with the third signal to form a crosstalk cancellation signal on the second line (2920).

5. The system of claim 1, wherein the amount a respective transition is overdriven is proportional to the transition magnitude of the respective transition.

6. The system of claim 1, further comprising:

   an encoder (2702) to receive a binary signal and to convert the binary signal into the plurality of input signals.

7. The system of claim 1, wherein the delayed versions of the plurality of input signals are delayed from the plurality of input signals by one bit.

8. A multilevel signal output from an integrated circuit, comprising:

   a main signal component including transitions among at least four logic states; the multilevel signal being
   **characterized by**
   equalization signal components each having a duration not longer than one bit, the equalization signal components being added to the main signal component such that a respective transition in the main signal component is followed by a respective equalization signal component that overdrives the respective transition by an amount dependent on a transition magnitude of the respective transition.

9. The multilevel signal of claim 8, wherein the amount a respective transition is overdriven is proportional to the transition magnitude of the respective transition.

**10.** The multilevel signal in claim 8, transmitted on a first signal transmission line (2728) among a plurality of signal transmission lines coupled to the integrated circuit, the multilevel signal further comprising crosstalk equalization signal components received from a crosstalk equalization line connected to a second signal transmission line adjacent the first signal transmission line.

**11.** The multilevel signal in claim 8, wherein the at least four logic states include first, second, third, and fourth logic states, the first, second, and third logic states being shifted down from respective first, second, and third reference voltage levels by respective first, second and third amounts.

**12.** The multilevel signal in claim 11, wherein the plurality of reference voltage levels includes a $V_{TERM}$, $V_{REFHI}$, $V_{REFM}$, and $V_{REFLO}$ in descending order, and wherein the first logic state is shifted down from $V_{TERM}$, the second logic state corresponds to a midpoint between $V_{REFHI}$ and $V_{REFM}$, the third logic state corresponds to a midpoint between $V_{REFM}$ and $V_{REFLO}$, and the fourth logic state is below $V_{REFLO}$.

**13.** The multilevel signal in claim 12, wherein the second amount is about twice the first amount and the third amount is about thrice the first amount.

**14.** A multilevel signal driver to output a multilevel signal of claim 8, said multilevel signal driver comprising:

main signal means (2713) for generating a main signal component including transitions among at least four logic states; said multilevel signal driver being
**characterized by**
equalization signal means (2720) for generating equalization signal components each having a duration not longer than one bit, and
adding means (2728) for adding the equalization signal components to the main signal component such that a respective transition in the main signal component is followed by a respective equalization signal component that overdrives the respective transition by an amount dependent on a transition magnitude of the respective transition.

**15.** An integrated circuit including a multilevel signal driver of claim 14.

**Patentansprüche**

**1.** Kommunikationssystem, welches umfasst:

einen Haupttreiber (2705), der ausgestaltet ist, um eine Mehrzahl von Eingangssignalen zu empfangen, und um auf einer ersten Leitung (2728) ein erstes Signal auszugeben, dass, beruhend auf der Mehrzahl von Eingangssignalen, über die Zeit zwischen N Ausgangsstufen variiert, wobei das Kommunikationssystem **gekennzeichnet ist durch**
einen Ausgleichsmechanismus, der einen ersten Hilfstreiber (2720) beinhaltet, mit einer Verstärkung, die im Wesentlichen proportional zu und kleiner als der erste Haupttreiber (2705) ist, wobei der erste Hilfstreiber ausgestaltet ist, um verzögerte und invertierte Formen der ersten Mehrzahl von Eingangssignalen zu empfangen, und um auf der ersten Leitung ein zweites Signal auszugeben, wobei das zweite Signal mit dem ersten Signal zu einem mehrstufigen Signal kombiniert wird, welches Übergänge zwischen N logischen Zuständen enthält, wobei ein entsprechender logischer Zustand von einem entsprechenden Zustand der N Ausgangsstufen um einen Betrag nach unten verschoben ist, der von dem entsprechenden logischen Zustand abhängt, und wobei ein entsprechender Übergang im mehrstufigen Signal um einen Betrag übersteuert wird, der von einem Übergangsbetrag des entsprechenden Übergangs abhängt.

**2.** System nach Anspruch 1, wobei der Haupttreiber (2705) und Ausgleichsmechanismus jeder eine Stromquelle (2721, 2722, 2723, 2711, 2712, 2713) beinhaltet, und wobei die Signalstufen Spannungen sind, die in einem Bereich zwischen Erde und einer positiven Spannung liegen.

**3.** System nach Anspruch 1, wobei der Ausgleichsmechanismus ferner einen Invertersatz (2910) und einen zweiten Hilfstreiber (2905) umfasst, wobei der zweite Hilfstreiber eine Verstärkung hat, die im Wesentlichen proportional zu und kleiner als der erste Haupttreiber (2705) ist, wobei der zweite Hilfstreiber (2905) ausgestaltet ist, um die erste Mehrzahl von Eingangssignalen nach der Inversion durch die Inverter zu empfangen, und um ein drittes Signal auf einer zweiten Leitung auszugeben, die benachbart zur ersten Leitung angeordnet ist.

4. System nach Anspruch 3, wobei der Ausgleichsmechanismus ferner einen dritten Hilfstreiber (2925) umfasst, wobei der dritte Hilfstreiber (2925) eine Verstärkung hat, die im Wesentlichen proportional zu und kleiner als der erste Haupttreiber (2705) ist, wobei der dritte Hilfstreiber (2925) ausgestaltet ist, um verzögerte Formen der ersten Mehrzahl von Eingangssignalen zu empfangen, und um auf der zweiten Leitung (2920) ein viertes Signal auszugeben, welches mit dem dritten Signal zu einem Übersprech-Auslöschungssignal auf der zweiten Leitung (2920) kombiniert wird.

5. System nach Anspruch 1, wobei der Betrag, um den ein entsprechender Übergang übersteuert wird, proportional zum Übergangsbetrag des entsprechenden Übergangs ist.

6. System nach Anspruch 1, ferner mit:

einer Verschlüsselungsvorrichtung (2702), die ein Binärsignal empfängt, und die das Binärsignal in die Mehrzahl von Eingangssignalen umwandelt.

7. System nach Anspruch 1, wobei die verzögerten Formen der Mehrzahl von Eingangssignalen gegen die Mehrzahl von Eingangssignalen um ein Bit verzögert sind.

8. Mehrstufiges Signal, das von einer integrierten Schaltung ausgegeben wird, mit:

einer Hauptsignalkomponente, die Übergänge zwischen zumindest vier logischen Zuständen enthält; wobei das mehrstufige Signal **gekennzeichnet ist durch**
Ausgleichssignalkomponenten, deren jeweilige Dauer ein Bit nicht übersteigt, wobei die Ausgleichssignalkomponenten so zur Hauptsignalkomponente addiert werden, dass ein entsprechender Übergang in der Hauptsignalkomponente von einer entsprechenden Ausgleichssignalkomponente gefolgt wird, die den entsprechenden Übergang um einen Betrag übersteuert, der von einem Übergangsbetrag des entsprechenden Übergangs abhängt.

9. Mehrstufiges Signal nach Anspruch 8, wobei der Betrag, um den ein entsprechender Übergang übersteuert wird, proportional ist zum Übergangsbetrag des entsprechenden Übergangs.

10. Mehrstufiges Signal nach Anspruch 8, welches auf einer ersten Signalübertragungsleitung (2728) aus einer Mehrzahl von Signalübertragungsleitungen, die mit der integrierten Schaltung verbunden sind, übertragen wird, wobei das mehrstufige Signal ferner Übersprech-Ausgleichssignalkomponenten enthält, die über eine Übersprech-Ausgleichsleitung empfangen werden, die mit einer zweiten Signalübertragungsleitung verbunden sind, die benachbart zur ersten Signalübertragungsleitung angeordnet ist.

11. Mehrstufiges Signal nach Anspruch 8, wobei die zumindest vier logischen Zustände einen ersten, zweiten, dritten und vierten Zustand beinhalten, wobei der erste, zweite und dritte logische Zustand von einer entsprechenden ersten, zweiten und dritten Spannungsstufe um einen entsprechenden ersten, zweiten und dritten Betrag nach unten verschoben sind.

12. Mehrstufiges Signal nach Anspruch 11, wobei die Mehrzahl von Referenz-Spannungsstufen in absteigender Reihenfolge $V_{TERM}$, $V_{REFHI}$, $V_{REFM}$, and $V_{REFLO}$ beinhalten, und wobei der erste logische Zustand von $V_{TERM}$ nach unten verschoben ist, wobei der zweite logische Zustand dem Mittelwert zwischen $V_{REFHI}$ und $V_{REFM}$ entspricht, wobei der dritte logische Zustand dem Mittelwert zwischen $V_{REFM}$ und $V_{REFLO}$ entspricht, und wobei der vierte logische Zustand unterhalb von $V_{REFLO}$ liegt.

13. Mehrstufiges Signal nach Anspruch 12, wobei der zweite Betrag etwa das Doppelte des ersten Betrags ist, und wobei der dritte Betrag etwa das Dreifache des ersten Betrags ist.

14. Mehrstufensignaltreiber zur Ausgabe eines mehrstufigen Signals nach Anspruch 8, welcher umfasst:

Hauptsignalmittel (2713) zur Erzeugung einer Hauptsignalkomponente, die Übergänge zwischen zumindest vier logischen Zuständen umfasst; wobei der Mehrstufensignaltreiber **gekennzeichnet ist durch**
Ausgleichssignalmittel (2720) zur Erzeugung von Ausgleichssignalkomponenten, deren jeweilige Dauer ein Bit nicht übersteigt,
Additionsmittel (2728) zur Addition der Ausgleichssignalkomponenten zur Hauptsignalkomponente derart, dass ein entsprechender Übergang in der Hauptsignalkomponente von einer entsprechenden Ausgleichssignalkomponente gefolgt wird, die den entsprechenden Übergang um einen Betrag übersteuert, der von einem Übergangsbetrag des entsprechenden Übergangs abhängt.

15. Eine integrierte Schaltung mit einem Mehrstufensignaltreiber nach Anspruch 14.

**Revendications**

1. Système de communication comprenant :

   un circuit de commande principal (2705) adapté pour recevoir une pluralité de signaux d'entrée et pour délivrer en sortie, sur une première ligne (2728), un premier signal qui varie dans le temps entre N niveaux de sortie fondés sur ladite pluralité de signaux d'entrée, le système de communication étant **caractérisé par**
   un mécanisme de compensation incluant un premier circuit de commande auxiliaire (2720) ayant un gain qui est sensiblement proportionnel et inférieur à celui dudit premier circuit de commande principal (2705), ledit premier circuit de commande auxiliaire étant configuré pour recevoir des versions retardées et inversées de ladite première pluralité de signaux d'entrée et pour délivrer en sortie un deuxième signal sur ladite première ligne, ledit deuxième signal étant combiné audit premier signal pour former un signal à niveaux multiples incluant des transitions entre N états logiques, un état logique respectif étant décalés vers le bas depuis un niveau respectif des N niveaux de sortie d'une quantité fonction de l'état logique respectif, et une transition respective dans le signal à niveaux multiples étant surélevée d'une quantité fonction d'une grandeur de transition de la transition respective.

2. Système selon la revendication 1, dans lequel lesdits circuits de commande principaux (2705) et ledit mécanisme de compensation incluent chacun une source de courant (2721, 2722, 2723, 2711, 2712, 2713), et lesdits niveaux de signal sont des tensions qui sont dans une gamme comprise entre la tension de masse et une tension positive.

3. Système selon la revendication 1, dans lequel ledit mécanisme de compensation comprend en outre un ensemble d'inverseurs (2910) et un deuxième circuit de commande auxiliaire (2905) ayant un gain qui est sensiblement proportionnel et inférieur à celui dudit premier circuit de commande principal (2705), ledit deuxième circuit de commande auxiliaire (2905) étant configuré pour recevoir ladite première pluralité de signaux d'entrée après inversion par lesdits inverseurs, et pour délivrer en sortie un troisième signal sur une deuxième ligne adjacente à ladite première ligne.

4. Système selon la revendication 3, dans lequel ledit mécanisme de compensation comprend en outre un troisième circuit de commande auxiliaire (2925) ayant un gain qui est sensiblement proportionnel et inférieur à celui dudit premier circuit de commande principal (2705), ledit troisième circuit de commande auxiliaire étant configuré pour recevoir des versions retardées de ladite première pluralité de signaux d'entrée, et pour délivrer en sortie, sur ladite deuxième ligne (2920), un quatrième signal qui est combiné au troisième signal pour former un signal de suppression de diaphonie sur la deuxième ligne (2920).

5. Système selon la revendication 1, dans lequel la quantité de laquelle la transition respective est surélevée est proportionnelle à la grandeur de transition de la transition respective.

6. Système selon la revendication 1, comprenant en outre :

   un encodeur (2702) destiné à recevoir un signal binaire et à convertir le signal binaire en la pluralité de signaux d'entrée.

7. Système selon la revendication 1, dans lequel les versions retardées de la pluralité de signaux d'entrée sont retardées d'un bit par rapport à la pluralité de signaux d'entrée.

8. Signal à niveaux multiples délivré en sortie d'un circuit intégré, ledit signal comprenant :

   une composante de signal principale incluant des transitions entre au moins quatre états logiques, le signal à niveaux multiples étant **caractérisé par**

des composantes de signal de compensation ayant chacune une durée qui n'est pas supérieure à un bit, les composantes de signal de compensation étant ajoutées à la composante de signal principale de sorte qu'une transition respective dans la composante de signal principale est suivie d'une composante de signal de compensation respective qui surélève la transition respective d'une quantité fonction d'une grandeur de transition de la transition respective.

9. Signal à niveaux multiples selon la revendication 8, dans lequel la quantité de laquelle une transition respective est surélevée est proportionnelle à la grandeur de transition de la transition respective.

10. Signal à niveaux multiples selon la revendication 8, transmis sur une première ligne de transmission de signal (2728) entre une pluralité de lignes de transmission de signal couplées au circuit intégré, le signal à niveaux multiples comprenant en outre des composantes de signal de compensation de diaphonie reçues d'une ligne de compensation de diaphonie connectée à une deuxième ligne de transmission de signal adjacente à la première ligne de transmission de signal.

11. Signal à niveaux multiples selon la revendication 8, dans lequel les au moins quatre états logiques incluent des premier, deuxième, troisième et quatrième états logiques, les premier, deuxième et troisième états logiques étant décalés vers le bas de première, deuxième et troisième quantités respectives par rapport à des premier, deuxième et troisième niveaux de tension de référence respectifs.

12. Signal à niveaux multiples selon la revendication 11, dans lequel la pluralité de niveaux de tension de référence inclut une $V_{TERM}$, $V_{REFHI}$, $V_{REFM}$, et $V_{REFLO}$, dans l'ordre décroissant, et dans lequel le premier état logique est décalé vers le bas par rapport à $V_{TERM}$, le deuxième état logique correspond à un point médian entre $V_{REFHI}$ et $V_{REFM}$, le troisième état logique correspond à un point médian entre $V_{REFM}$ et $V_{REFLO}$, et le quatrième état logique est au-dessous de $V_{REFLO}$.

13. Signal à niveaux mulitiples selon la revendication 12, dans lequel la deuxième quantité est égale à environ deux fois la première quantité et la troisième quantité est égale à environ trois fois la première quantité.

14. Circuit de commande à signal à niveaux multiples destiné à délivrer en sortie un signal à niveaux multiples selon la revendication 8, ledit circuit de commande à signal à niveaux multiples comprenant :

des moyens de signal principaux (2713) destinés à générer une composante de signal principale incluant des transitions entre au moins quatre états logiques, ledit circuit de commande à signal à niveaux multiples étant **caractérisé par**
des moyens de signal de compensation (2720) destinés à générer des composantes de signal de compensation ayant chacune une durée qui n'est pas supérieure à un bit, et
des moyens d'addition (2728) destinés à ajouter les composantes de signal de compensation à la composante de signal principale de sorte qu'une transition respective dans la composante de signal principale est suivie d'une composante de signal de compensation respective qui surélève la transition respective d'une quantité fonction d'une grandeur de transition de la transition respective.

15. Circuit intégré incluant un circuit de commande à signal à niveaux multiples selon la revendication 14.

**FIGURE 1**

324-1

$V_{TERM}$

320        320-1

$Z_0$

323-1

324-2

$V_{TERM}$

320-2

$Z_0$

323-2

**MEMORY CELL ARRAY**

**321 MEMORY CONTROLLER**

**326**

**323-3**   **324-3**

**323-5**   **324-5**

**DECODER**

**323-4**   **324-4**

**323-6**   **324-6**

**I/O BUFFER**

**322-1 MEMORY**

**322-2 MEMORY**

EP 1 410 588 B1

# FIGURE 2

$V_{TERM}$
00 { $V_{OUT} = V_{TERM}$

$V_{REFHI}$

01 { $V_{OUT} = V_{TERM} - ((1/3)I.Zo)$

$V_{REFM}$

11 { $V_{OUT} = V_{TERM} - ((2/3)I.Zo)$

$V_{REFLO}$
10 {

$V_{OUT} = V_{TERM} - I.Zo$

GROUND

# FIG.3A

4 PAM OUTPUT DRIVER

# FIG.3B

4 PAM OUTPUT DRIVER

# FIG. 4A

GDS > 0

$I_D$ / $V_{DS}$

# FIG. 4B

$V_{OUT}$

00
01
10
11

# FIG. 4C

$V_{OUT}$

00
01
11
10

EP 1 410 588 B1

# FIG.5A

1000

1007

EVEN LSB

ENCODER

EVEN MSB

A

B

C

W  1002

∝W  1004

βW  1006

956

CLK

1007

ODD LSB

ENCODER

ODD MSB

A

B

C

W  1002

∝W  1004

βW  1006

CLK

### ENCODER LOGIC

| MSB | LSB | A | B | C |
|-----|-----|---|---|---|
| 0 | 0 | 0 | 0 | 0 |
| 0 | 1 | 1 | 0 | 0 |
| 1 | 1 | 1 | 1 | 0 |
| 1 | 0 | 1 | 1 | 1 |

# FIG.5B

1007

LSB ——— A

MSB ——— B

——— C

# FIG.5C

1007

LSB ——— A

MSB ——— B

——— C

# FIG. 6

CIRCUIT TO REDUCE SWITCHING NOISE

# FIG. 7

# FIG. 8

GDS COMPENSATED MULTI-PAM OUTPUT DRIVER

# FIG. 9A

GDS COMPENSATED MULTI-PAM OUTPUT DRIVER WITH CURRENT CONTROL

EP 1 410 588 B1

# FIG. 9B

# FIG. 9C

☐ DATA MUXED BEFORE PAD

☐ REQUIRES RUNNING CMOS SIGNAL A,B,C @ FULL FREQUENCY

# FIG.10

CIRCUIT FOR CALIBRATING THE GDS COMPENSATED
OUTPUT DRIVER WITH CURRENT CONTROL

# FIG. 11A

SET CURRENT CONTROL ENABLE BITS (CCEN AND CCENB) TO ACTIVATE THE PASSGATE PAIRS. — 1070

— 1072

SELECT VREF = VREFLO
SET A1=B1=C1=0, A2=1, B2=C2=0; AND
CC=100...0, CCB=100...0, CCC=100...0. — 1078

GENERATE MIDPOINT VOLTAGE Vx. — 1080

DOES Vx = VREF (WITHIN 1 LSB) — 1082 → YES

NO

AUGMENT THE CC CODE BASED ON THE COMPARISON. — 1084

— 1074

SELECT VREF = VREFM
SET A1=1, B1=C1=0, A2=B2=1, C2=0; AND
CC=UNCHANGED, CCB=100...0, CCC=100...0. — 1086

GENERATE MIDPOINT VOLTAGE Vx. — 1088

DOES Vx = VREF (WITHIN 1 LSB) — 1090 → YES

NO

AUGMENT THE CCB CODE BASED ON THE COMPARISON. — 1092

METHOD FOR CALIBRATING THE GDS COMPENSATED OUTPUT DRIVER WITH CURRENT CONTROL

(A)

# FIG. 11B

Ⓐ

─ 1076

─ 1094

SELECT VREF = VREFL1;
SET A1=B1=1, C1=0, A2=B2=C2=1; AND
CC=UHCHANGED, CCB=UNCHANGED, CCC=100...

1096
GENERATE MIDPOINT VOLTAGE Vx.

1098
DOES Vx = VREF (WITHIN 1 LSB) — YES → DONE

NO

1100
AUGMENT THE CCC CODE BASED ON THE COMPARISON.

METHOD FOR CALIBRATING THE GDS COMPENSATED OUTPUT
DRIVER WITH CURRENT CONTROL

# FIG. 12

1380

1382
VTERM
1386
R1
1392
VREFHI
R2
VREFM
1394
1384
VREF
1388
R3
VREFLO
1390

FIG.13A

FIG.13B

# FIG.13C

CC CAL CHK

| WAVE | SYMBOL |
|---|---|
| DO:AO:V(CC OUT) | — ✕ — |
| DO:AO:V(DS) | --- ✕ -- |
| DO:AO:V(AS) | — - — |

VOLTAGES(LIN)
1526 — CANCELLATION OR AUTO-ZERO — COMPARE

1528

VOLTAGES(LIN)

1530 — STROKE DATA

TIME(LIN)(TIME)

CC CAL CHK

| WAVE | SYMBOL |
|---|---|
| DO:AO:V(vrefm) | — ✕ — |
| DO:AO:V(inhi) | -- ⊖ -- |
| DO:AO:V(inlo) | --- △ --- |

FIXED 1506

EXTERNAL REFERENCE        FROM 1502

VOLTAGES (LIN)

SLOW RAMP        1508

TIME(LIN)(TIME)

EP 1 410 588 B1

# FIG. 13D

$V_{OUT} = A \cdot V_{IN}$

$V_{IN}$

DIFFERENTIAL IN
SINGLE ENDED OUT

$V_{OUT} = A \cdot V_{IN}$

$V_{IN}$

$V_{IN}$

$V_{OUT} = A \cdot V_{IN}$

# FIG. 13E

ANY INPUT
VOLTAGE

$+ \quad +V_{DCT}$

$-$

1512X2

1516

1522

$V_{DA}$

$+ \quad V_{AZ}$

$-$

EP 1 410 588 B1

FIG.14A

FIG.14B

FIG.14C   MISMATCH W/OS CANCELLATION

CC CAL CHK:

CHK_OSC_MIS_OUB.XP EVB
CHK_OSC_MIS_OUB.XP EVB2
CHK_OSC_MIS_OUB.XP EVB6
CHK_OSC_MIS_OUB.XP VREF CMP / V_CMP
CHK_OSC_MIS_OUB.XP OU / OUB

CANCELLATION PHASE

SAMPLE EDGE

TIME (S)

FIG.14D    W/OS CANCEL

EP 1 410 588 B1

# FIG.15A

# FIG.15B

CURRENT DRIVERS
TRANSCONDUCTANCE STAGE
LATCHING STAGE
TO STATE MACHINE
CLOCK
MULTI LEVER REFERENCE AND MUX

# FIGURE 16

# FIGURE 17

EP 1 410 588 B1

# FIGURE 18

2600

2602

$V_{TERM}$

R1

$V_{REFHI}$

R2

$V_{REFM}$

R3

$V_{REFLO}$

R4

# FIGURE 19

— — — — — 00

— — — — 00

— — — — 00

01

10

11

# FIGURE 20

# FIGURE 21

FIGURE 22A

FIGURE 22B

FIGURE 22C

EP 1 410 588 B1

# FIGURE 23

EP 1 410 588 B1

# FIGURE 24

5130

ECD
5102

DLY
5118

M →

S

# FIGURE 25

2800

$A_J(N)$ — XTKJ FIR 2802

$A_1(N)$ — XTK1 FIR 2804

$V(N)$ — SELF FIR 2806 — $V'(N)$

# FIGURE 26A

A₁(N)

2900

T

# FIGURE 26B

V(N)

2902

T

# FIGURE 26C

EQ(N)

2904

T

# FIGURE 26D

B(N)

2906

T

# FIGURE 26E

C(N)

2908

T

EP 1 410 588 B1

FIGURE 27

# FIGURE 28

# FIGURE 29

**FIGURE 30**

EP 1 410 588 B1

# FIGURE 31

# FIGURE 32

## FIGURE 33A

$A_1(N)$

5450

T

## FIGURE 33B

$V(N)$

5452

T

## FIGURE 33C

$EQ(N)$

5455

T

## FIGURE 33D

$V'(N)$

5457

T

## FIGURE 33E

$V(N)$

5459

T

EP 1 410 588 B1

# FIGURE 34

# FIGURE 35

**FIGURE 36**

# FIGURE 37

EP 1 410 588 B1

FIGURE 38

FIGURE 39

# FIGURE 40

START

3200

GENERATE AT LEAST ONE REFERENCE VOLTAGE LEVEL

3202

DETERMINE AT LEAST ONE CURRENT CONTROL SIGNAL

3204

ADJUST THE AT LEAST ONE REFERENCE VOLTAGE LEVEL BASED ON THE CURRENT CONTROL SIGNAL

3206

END

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 47891600 A
- US 15818999 P
- US 5254883 A
- WO 9910982 A
- US 5243703 A, Farmwald
- US 478916 A